(19) Europäisches Patentamt
European Patent Office
Office européen des brevets

(11) **EP 4 787 963 A1**

(12) **EUROPEAN PATENT APPLICATION**
published in accordance with Art. 153(4) EPC

(43) Date of publication:
**05.08.2026 Bulletin 2026/32**

(21) Application number: **23953343.3**

(22) Date of filing: **25.09.2023**

(51) International Patent Classification (IPC):
**H04W 36/08** (2009.01)

(52) Cooperative Patent Classification (CPC):
**H04W 36/08**

(86) International application number:
**PCT/CN2023/121229**

(87) International publication number:
**WO 2025/065178 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• HU, Yi
  **Dongguan, Guangdong 523860 (CN)**
• LI, Haitao
  **Dongguan, Guangdong 523860 (CN)**

(74) Representative: **Penza, Giancarlo
Bugnion S.p.A.
Viale Lancetti, 17
20158 Milano (IT)**

(54) **WIRELESS COMMUNICATION METHODS, TERMINAL DEVICES, AND NETWORK DEVICES**

(57) Provided are wireless communication methods, terminal devices, and network devices. The method includes: a first terminal device performs cell selection according to a first criterion, the first criterion corresponding to an alert signal. In the embodiments of the present disclosure, a new cell selection criterion is introduced for an alert signal, such that when the channel quality is relatively poor, a terminal device can still normally camp on a cell to receive the alert signal.

The first terminal device performs cell selection according to a first criterion — S210

**FIG. 2**

EP 4 787 963 A1

## Description

TECHNICAL FIELD

The present disclosure relates to the technical field of communication, and more particularly, to wireless communication methods, terminal devices, and network devices.

BACKGROUND

If poor cell signal quality results in a paging failure of a terminal device, a network device may send an alert signal to the terminal device. However, in the case of poor cell signal quality, the terminal device may not be able to camp in the current cell, resulting in the terminal device being unable to monitor or receive the alert signal.

SUMMARY

The present disclosure provides a wireless communication method, a terminal device, and a network device. Various aspects of the present disclosure will be described in detail below.

According to a first aspect, there is provided a wireless communication method, including that: a first terminal device performs cell selection according to a first criterion, the first criterion corresponding to an alert signal.

According to a second aspect, there is provided a wireless communication method, including that: a first terminal device activates or deactivates a reception function for an alert signal.

According to a third aspect, there is provided a wireless communication method, including that: a network device transmits first configuration information to a first terminal device, the first configuration information corresponding to an alert signal.

According to a fourth aspect, there is provided a terminal device, the terminal device being a first terminal device, the terminal device including: a processing module configured to perform cell selection according to a first criterion, the first criterion corresponding to an alert signal.

According to a fifth aspect, there is provided a terminal device, the terminal device being a first terminal device, and the terminal device including: a processing module configured to activate or deactivate a reception function for an alert signal.

According to a sixth aspect, there is provided a network device, the network device including: a communication module configured to transmit first configuration information to a first terminal device, the first configuration information corresponding to an alert signal.

In a seventh aspect, there is provided a terminal device, including: a memory for storing a program and a processor for calling the program in the memory to cause the terminal device to perform the method of the first or second aspect.

In an eighth aspect, there is provided a network device, including: a memory for storing a program and a processor for calling the program in the memory to cause the network device to perform the method of the third aspect.

In a ninth aspect, there is provided an apparatus, including: a processor for calling a program from a memory to cause the apparatus to perform the method of any one of the first to third aspects.

In a tenth aspect, there is provided a chip, including: a processor for calling a program from a memory to cause a device mounted with the chip to perform the method of any one of the first to third aspects.

In an eleventh aspect, there is provided a computer-readable storage medium which has stored thereon a program that causes a computer to perform the method of any one of the first to third aspects.

In a twelfth aspect, there is provided a computer program product including a program that causes a computer to perform the method of any one of the first to third aspects.

In a thirteenth aspect, there is provided a computer program that causes a computer to perform the method of any one of the first to third aspects.

According to the embodiments of the present disclosure, a new cell selection criterion is introduced for an alert signal, which helps a terminal device to normally camp in a cell to receive the alert signal even when the channel quality is poor.

BRIEF DESCRIPTION OF THE DRAWINGS

FIG. 1A is an example diagram of a communication scenario to which an embodiment of the present disclosure can be applied.

FIG. 1B is an example diagram of another communication scenario to which an embodiment of the present disclosure can be applied.

FIG. 1C is an example diagram of yet another communication scenario to which an embodiment of the present disclosure can be applied.

FIG. 2 is a schematic flow diagram of a wireless communication method according to an embodiment of the present disclosure.

FIG. 3 is a schematic flow diagram of a wireless communication method according to another embodiment of the present disclosure.

FIG. 4 is a schematic flow diagram of a cell selection method according to an embodiment of the present disclosure.

FIG. 5 is a schematic flow diagram of a wireless communication method according to another embodiment of the present disclosure.

FIG. 6 is an example diagram of an alert-signal reception-state transition process according to an embodiment of the present disclosure.

FIG. 7 is a schematic flow diagram of a wireless communication method according to another embodiment of the present disclosure.

FIG. 8 is a schematic structural diagram of a terminal device according to an embodiment of the present disclosure.

FIG. 9 is a schematic structural diagram of a terminal device according to another embodiment of the present disclosure.

FIG. 10 is a schematic structural diagram of a network device according to an embodiment of the present disclosure.

FIG. 11 is a schematic structural diagram of an apparatus to which an embodiment of the present disclosure can be applied.

## DETAILED DESCRIPTION

### Architecture of a communication system

The technical solution of the embodiments of the present disclosure can be applied to various communication systems, such as a global system of mobile communication (GSM) system, a code division multiple access (CDMA) system, and a wideband code division multiple access (WCDMA) system, a general packet radio service (GPRS), a long term evolution (LTE) system, an advanced long term evolution (LTE-A) system, a new radio (NR) system, an evolved NR system, an LTE-based access to unlicensed spectrum (LTE-U) system, a NR-based access to unlicensed spectrum (NR-U) system, a non-terrestrial network (NTN) system, a universal mobile telecommunication system (UMTS), wireless local area networks (WLAN), wireless fidelity (WiFi), a 5th-generation (5G) system, or other communication systems, such as future communication systems, such as sixth-generation mobile communication systems, satellite communication systems, etc.

Generally speaking, conventional communication systems support a limited number of connections and are easy to implement. However, with the development of communication technology, mobile communication systems will support not only conventional communication, but also, for example, device-to-device (D2D) communication, machine-to-machine (M2M) communication, machine type communication (MTC), vehicle-to-vehicle (V2V) communication, or vehicle-to-everything (V2X) communication, and the like. The embodiments of the present disclosure can also be applied to these communication systems.

The communication system in the embodiments of the present disclosure can be applied to a carrier aggregation (CA) scenario, a dual connectivity (DC) scenario, and a standalone (SA) network layout scenario.

The communication system in the embodiments of the present disclosure can be applied to an unlicensed spectrum, and the unlicensed spectrum may be regarded as a shared spectrum. Alternatively, the communication system in the embodiments of the present disclosure may also be applied to a licensed spectrum, and the licensed spectrum may be regarded as a dedicated spectrum.

The embodiments of the present disclosure can be applied to an NTN system or a terrestrial networks (TN) system. By way of example and not limitation, the NTN system includes an NR-based NTN system and an IoT-based NTN system.

The embodiments of the present disclosure are described in conjunction with a network device and a terminal device. The terminal device may also be referred to as a user equipment (UE), an access terminal, a user unit, a user station, a mobile station (MS), a mobile Terminal (MT), a remote station, a remote terminal, a mobile device, a user terminal, a terminal, a wireless communication device, a user agent or a user device, and the like.

In the embodiments of the present disclosure, the terminal device may be a STATION (ST) in a WLAN, a cellular telephone, a cordless telephone, a session initiation protocol (SIP) telephone, a wireless local loop (WLL) station, a personal digital assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN).

In the embodiments of the present disclosure, the terminal device may be a device for providing voice and/or data connectivity to a user, and may be used to connect people, objects and machines, for example, a vehicle-mounted device and a handheld device having a wireless connection function, or the like. The terminal device in the embodiments of the present disclosure may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the terminal device may be used to act as a base station. For example, the terminal device may act as a scheduling entity that provides sidelink signals between the terminal devices in V2X or D2D, etc. For example, cellular telephones and automobiles may communicate with each other using sidelink signals. Communication may be carried out between cellular phones and smart home devices without relaying communication signals through a base station.

In the embodiments of the present disclosure, the terminal device may be deployed on land, including indoor or outdoor, handheld, wearable, or vehicle-mounted. The terminal device may also be deployed on the water (such as ships, etc.) and in the air (e.g. on aircraft, balloons and satellites, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like. The terminal device in the embodiments of the present disclosure may also be referred to as a terminal, a user equipment (UE), an access terminal device, a vehicle-mounted terminal, an industrial control terminal, a UE unit, a UE station, a mobile station, a mobile station, a remote station, a remote terminal device, a mobile device, a UE, a wireless communication device, a UE agent, a UE apparatus, or the like. The terminal device may also be stationary or mobile.

As an example and not limitation, in the embodiments of the present disclosure, the terminal device may also be a wearable device. Wearable devices can also be called wearable smart devices, which are a general term for wearable devices which are developed by applying wearable technology to intelligently designed daily wear, such as glasses, gloves, watches, clothing and shoes. A wearable device is a portable device that is worn directly on the body or integrated into the user's clothes or accessories. Wearable devices are not only hardware devices, but also realize powerful functions through software support, data interaction and cloud interaction. Generalized wearable smart devices include full functions, large size, and can realize complete or partial functions without relying on smart phones, such as smart watches or smart glasses, as well as those that only focus on a certain type of application functions and need to be used in conjunction with other devices such as smart phones, such as various smart bracelets and smart jewelry for physical sign monitoring.

The network device in the embodiments of the present disclosure may be a device for communicating with the terminal device, and the network device may also be referred to as an access network device or a radio access network device, for example, the network device may be a base station. The network device in the embodiments of the present disclosure may refer to a radio access network (RAN) node (or device) that may connect the terminal device to a wireless network. The base station may broadly cover or be substituted for various names such as a NodeB, an evolved NodeB, a next generation base station, a relay station, an access point, a transmitting and receiving point (TRP), a transmitting point (TP), a master station (MeNB), a secondary station (SeNB), a Multi-Standard Radio (MSR) node, a home base station, a network controller, an access point, a wireless node, a transmission node, a transceiving node, a base band unit (BBU), a remote radio unit (RRU), an active antenna unit (AAU), a remote radio head (RRH), a central unit (CU), a distributed unit (DU), a location node, and the like. The base station may be a macro base station, a micro base station, a relay node, a donor node, or the like, or a combination thereof. The base station may also refer to a communication module, modem or chip which may be arranged within the aforementioned devices or apparatuses. The base station may also be device functioning as a base station in a mobile switching center and in device-to-device D2D, vehicle-to-everything (V2X), machine-to-machine (M2M) communication, a networkside device in a 6G network, and a device functioning as a base station in a future communication system, or the like. The base stations may support networks under same or different access technologies. The embodiments of the present disclosure do not limit the specific technology adopted by the network device and the specific device form.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the present disclosure may refer to a CU or a DU, or the network device includes a CU and a DU. The gNB may further include an AAU.

The network device and terminal device may be deployed on land, including indoor or outdoor, handheld or vehicle-mounted; they may also be deployed on the water; and they may also be deployed on aircraft, balloons and satellites in the air. In the embodiments of the present disclosure, the scenario in which the network device and the terminal device are located is not limited.

By way of example and not limitation, in embodiments of the present disclosure, the network device may have mobile characteristics, for example, the network device may be a mobile device. In some embodiments of the present disclosure, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. In some embodiments of the present disclosure, the network device may also be a base station disposed on land, water, or the like.

In the embodiments of the present disclosure, the network device may provide a service for a cell, and the terminal device may communicate with the network device through a transmission resource (for example, a frequency domain resource, or a spectrum resource) used by the cell. The cell may be a cell corresponding to the network device (for example, a base station), and the cell may belong to a macro base station or a base station corresponding to a small cell. Here, the small cell may include a metro cell, a micro cell, a pico cell, a femto cell, and the like. These small cells have small coverage areas and low transmission power, and are suitable for providing high-rate data transmission services.

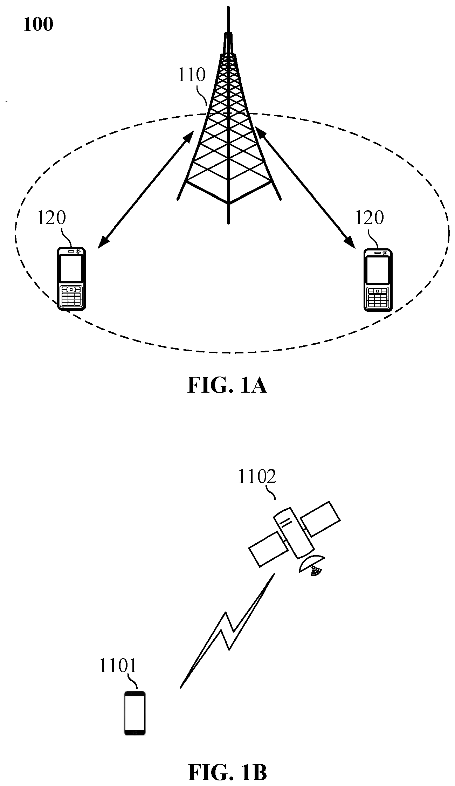

FIG. 1A is an architectural diagram of a communication system according to an embodiment of the present disclosure. As shown in FIG. 1A, the communication system 100 may include a network device 110 which may be a device that communicates with a terminal device 120 (or referred to as a communication terminal, a terminal). The network device 110 may provide communication coverage for a particular geographic area and may communicate with terminal devices located within the coverage area.

FIG. 1A exemplarily illustrates one network device and two terminal devices. In some embodiments of the present disclosure, the communication system 100 may include a plurality of network devices and the coverage range of each network device may include another number of terminal devices, which are not limited in the embodiments of the present disclosure.

FIG. 1B is an architectural schematic diagram of another communication system according to an embodiment of the present disclosure. In FIG. 1B, a terminal device 1101 and a satellite 1102 are included, and wireless communication may be performed between the terminal device 1101 and the satellite 1102. The network formed between the terminal device 1101 and the satellite 1102 may be referred to as an NTN. In the architecture of the communication system illustrated in FIG. 1B, the satellite 1102 may have the function of a base station, and the terminal device 1101 and the satellite 1102 may communicate directly. Under the system architecture, the satellite 1102 may be referred to as a network device. In some embodiments of the present disclosure, the communication system may include a plurality of network devices 1102, and the coverage range of each network device 1102 may include another number of terminal devices, which are not limited in the embodiments of the present disclosure.

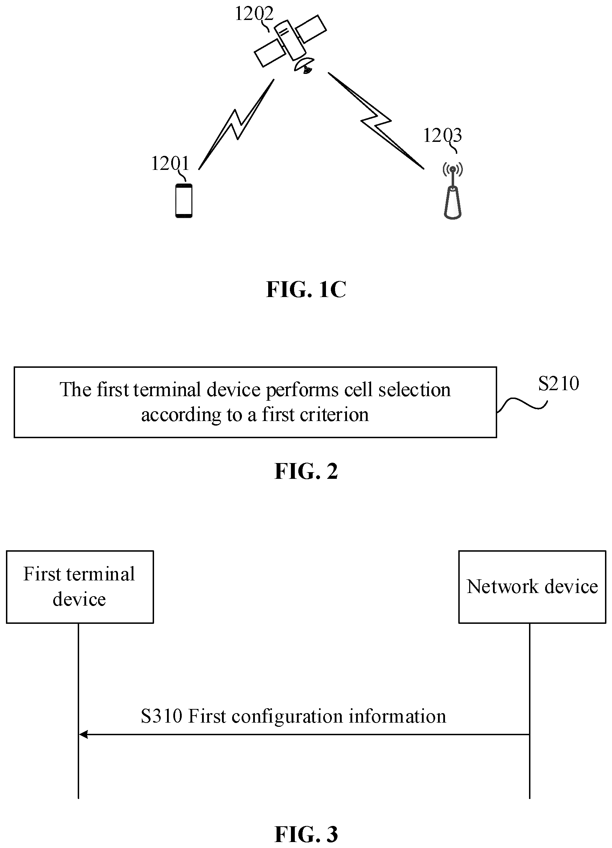

FIG. 1C is an architectural diagram of another communication system according to an embodiment of the present disclosure. In FIG. 1C, there are a terminal device 1201, a satellite 1202, and a base station 1203. Wireless communication may be performed between the terminal device 1201 and the satellite 1202, and communication may be performed between the satellite 1202 and the base station 1203. The network formed between the terminal device 1201, the satellite 1202, and the base station 1203 may be referred to as an NTN. In the architecture of the communication system illustrated in FIG. 1C, the satellite 1202 may not have the function of a base station, and communication between the terminal device 1201 and the base station 1203 requires transit through the satellite 1202. Under this system architecture, the base station 1203 may be referred to as a network device. In some embodiments of the present disclosure, the communication system may include a plurality of network devices 1203, and the coverage range of each network device 1203 may include another number of terminal devices, which are not limited in the embodiments of the present disclosure.

It should be noted that FIGS. 1A to 1C only illustrate systems to which the present disclosure is applicable by way of example, and the method shown in the embodiments of the present disclosure can also be applied to other systems, such as a 5G communication system, an LTE communication system, and the like, which are not limited in the embodiments of the present disclosure.

In some embodiments of the present disclosure, the wireless communication system shown in FIGS. 1A to 1C may further include other network entities such as a mobility management entity (MME), an access and mobility management function (AMF), and the like, which are not limited in the embodiments of the present disclosure.

It should be understood that a device having a communication function in the network/system in the embodiments of the present disclosure may be referred to as a communication device. Taking the communication system 100 shown in FIG. 1A as an example, the communication device may include a network device 110 and a terminal device 120 having a communication function, and the network device 110 and the terminal device 120 may be specific devices described above, and will not be repeated here. The communication device may also include other devices in the communication system 100, such as other network entities such as a network controller and a mobility management entity, which are not limited in the embodiments of the present disclosure.

It should be understood that the "indicate" mentioned in the embodiments of the present disclosure may be a direct indication, an indirect indication, or an associated relationship. For example, A indicates B, which may mean that A directly indicates B, for example, B can be obtained by A; or, may mean that A indicates B indirectly, for example, A indicates C, and B can be obtained through C; or, may mean that there is an association relationship between A and B.

In the description of the embodiments of the present disclosure, the term "correspond" may mean that there is a direct correspondence or indirect correspondence relationship between the two, or may mean that there is a correlation relationship between the two, or may refer to a relationship between indicating and being instructed, configuring and being configured, or the like.

The "configure" in the embodiments of the present disclosure may include configuration through at least one of a system message, a radio resource control (RRC) signaling, and a media access control control element (MAC CE).

In some embodiments of the present disclosure, "predefined" or "preset" may be achieved by storing corresponding codes, tables in advance in devices (e.g., including terminal devices and network devices), or through other methods that can be used to indicate relevant information. The present disclosure does not limit specific implementations thereof. For example, "predefined" may refer to defined in a protocol.

In some embodiments of the present disclosure, the "protocol" may refer to a standard protocol in the field of communication, and may include, for example, an LTE protocol, an NR protocol, and related protocols applied in future communication systems, which are not limited in the present disclosure.

RRC state of the terminal device

The RRC state of the terminal device may include an RRC idle state (RRC_IDLE), an RRC connected state (RRC_CONNECTED), and an RRC inactive state (RRC_INACTIVE).

When the terminal device is in the RRC idle state, the mobility of the terminal device may be managed based on cell selection/reselection of the terminal device. The terminal device may receive paging initiated by a core network (CN), and a paging area may be configured by the CN. If the terminal device is in the RRC idle state, the network device may neither establish an RRC connection with the terminal device nor store an access stratum (AS) context of the terminal device.

When the terminal device is in the RRC connection state, an RRC connection may be established between the network device and the terminal device, and the network device may store the AS context of the terminal device. The network device knows that the location of the terminal device is a cell-level location. The mobility of the terminal device may be controlled by the network device, and unicast data may be transmitted between the terminal device and the network device.

When the terminal device is in the RRC inactive state, the mobility of the terminal device may be managed based on cell selection/reselection of the terminal device. In addition, there may be a connection between the CN and the base station, and the AS context of the terminal device exists on a certain base station. The paging may be triggered by the RAN, the paging area based on the RAN may be managed by the RAN, and the network device knows that the location of the terminal device is a RAN-based paging-area-level location.

Paging mechanism

The main function of paging is to enable the network device to page the terminal device through a paging message when the terminal device is in the RRC idle state or the RRC inactive state, or to notify the terminal device of a system message change or earthquake tsunami/public warning information through a short message (which is applicable to all RRC states of the terminal device, including the RRC connection state).

The channels involved in paging include a physical downlink control channel (PDCCH) scrambled by a paging radio network temporary identity (P-RNTI) and a physical downlink shared channel (PDSCH) scheduled by the PDCCH. The paging message may be transmitted in the PDSCH. The short message may be carried in the PDCCH and is typically 8-bit information.

For a terminal device in an RRC idle state or an RRC inactive state, since there is no data communication between the terminal device and the network device, in order to save power, the terminal device may discontinuously monitor the paging channel, that is, adopting a paging discontinuous reception (DRX) mechanism. Under the paging DRX mechanism, the terminal device only needs to monitor paging during one paging occasion (PO) within each DRX cycle. A PO may be understood as a number of PDCCH monitoring occasions. The PO may include a plurality of slots. In addition to the PO, concepts related to paging include paging frame (PF). A PF is a radio frame (10ms). One PF may include one or more than one PO; alternatively, one PF may include the starting position of one or more than one PO.

The paging DRX cycle may be determined by a common cycle in the system broadcast and a dedicated cycle configured in higher layer signaling (such as non-access stratum (NAS) signaling). The terminal device may take the smallest cycle of the two as the paging DRX cycle. From a network device perspective, a paging DRX cycle may include one or more than one PO, and the location at which the terminal device monitors the PO is related to the identity (ID) of the terminal device.

For example, the PF and PO of the terminal device in one paging DRX cycle are determined as follows:

The system frame number (SFN) of the PF is determined by the following formula: (SFN + PF _ offset) mod T = (T div N) * (UE _ ID mod N).

The number Index (i _ s) of the PO within one PF may be determined by the following formula: i _ s = floor (UE _ ID/N) mod Ns.

In the above two formulas, T represents the DRX cycle in which the terminal device receives paging. The network device may broadcast a default DRX cycle, and if a higher layer (such as an RRC layer) configures a terminal device-specific DRX cycle for the terminal device, the smaller value between the DRX cycle broadcasted by the network device and the terminal device-specific DRX cycle configured by the higher layer may be used as the DRX cycle of the terminal device. If the higher layer does not configure a terminal device-specific DRX cycle for the terminal device, the DRX cycle broadcasted by the network device may be regarded as the DRX cycle of the terminal device. N represents the number of PFs included in one DRX cycle. Ns represents the number of POs contained in one PF. PF _ offset may be used to determine a time domain offset of the PF. The UE _ ID may be determined based on a formula which is 5G-S-TMSI mod 1024, where 5G-S-TMSI represents a fifth-generation system temporary mobile subscriber identity (5gs-temporary mobile subscriber identity).

Cell selection of terminal device in disconnected state

The terminal device in the disconnected state may monitor paging messages on a serving cell and perform radio resource management (RRM) measurements on the serving cell and other neighboring cells based on the configuration of the network device to support mobility operations, such as cell selection/reselection, etc. The cell selection includes a cell selection dependent on stored information and an initial cell selection.

If the terminal device performs the initial cell selection, the terminal device usually does not store prior information of the frequency point of the network device at the time of cell selection. In this case, the action of the terminal device performing the cell selection may include that: the terminal device scans frequency points in a band according to the capability of itself to find a suitable cell; then, at each frequency point, the terminal device searches for the cell with the strongest signal; and once a suitable cell is found, the terminal device may camp on the cell.

If the terminal device performs the cell selection depending on stored information, the terminal device has stored frequency point information of the network device at the time of cell selection. In addition, the terminal device may have stored a previously detected cell or cell-related parameters. In this case, the action of performing cell selection by the terminal device may include that: the terminal device performs the cell selection according to the stored information, that is, preferentially searching for a cell in which relevant information is stored; once a suitable cell is found, the terminal device may choose to camp on the cell; and if the terminal device does not find a suitable cell, the terminal device initiates initial cell selection.

The terminal device may measure the reference signal received power (RSRP) and the reference signal receiving quality (RSRQ) of a current cell, and determine whether the current cell meets the cell camping condition based on an S criterion.

The S criterion may be defined as: Srxlev > 0 and Squal > 0 are satisfied simultaneously. $Srxlev = Q_{rxlevmeas} - (Q_{rxlevmin} + Q_{rxlevminoffset}) - P_{compensation} - Q_{offsettemp}$; $Squal = Q_{qualmeas} - (Q_{qualmin} + Q_{qualminoffset}) - Q_{offsettemp}$.

In the above formula, Srxlev represents a cell selection reception level value; Squal represents a cell selection quality value; $Q_{rxlevmeas}$ represents a measurement value of the RSRP of the terminal device in the cell; $Q_{rxlevmeas}$ represents a measurement value of the RSRQ of the terminal device in the cell; $Q_{rxlevmin}$ represents the minimum RSRP required by the cell; $Q_{qualmin}$ represents the minimum RSRQ required by the cell; $Q_{rxlevmin}$ and $Q_{qualmin}$ may be configured by the network device via broadcast; $P_{compensation}$ means power compensation due to low power of the terminal device; $Q_{rxlevminoffset}$ represents the offset value of $Q_{rxlevmin}$; $Q_{offsettemp}$ represents a temporary offset value (which may be notified via system broadcast); and $Q_{qualminoffset}$ represents the offset value of $Q_{qualmin}$.

As mentioned above, some terminal devices (such as terminal devices in a disconnected state) need to monitor/receive paging messages on the serving cell in which they camp. In some cells (e.g., NTN cells), terminal devices in a non-line of sight (NLOS) environment (e.g., terminal devices are in a pocket, or terminal devices are indoors or downstairs) have poor channel quality and cannot receive paging messages from network devices. Based on the evaluation results provided by the 3rd generation partnership project (3GPP) TR38.811, compared with the line of sight (LOS) environment, the terminal device in the NLOS environment may suffer an increased penetration loss by more than 18dB, which may cause the terminal device to be unable to receive paging messages. In order to solve the problem that terminal device in the NLOS environment cannot receive paging messages, 3GPP is discussing introduction of the alert characteristics to communication systems. In order to support such characteristics, an alert signal or alert message may be introduced in the communication system. The design requirements of the alert signal meet: even if the terminal device is in the NLOS environment, it can receive an alert signal from the network device. In this way, for the terminal device in the NLOS environment, when a paging message is unreachable (for example, the network device sends the paging message to the terminal device but does not receive any response from the terminal device), the network device may first send an alert signal to the terminal device, and the terminal device may move to a place with a better signal to receive the paging message after receiving the alert signal.

Based on the current cell selection criteria, the terminal device can normally camp in a cell only when the RSRP/RSRQ measured on the cell is higher than a certain threshold. For the cell supporting the alert characteristics, how to make the terminal device normally camp in the cell to receive an alert signal even when the channel quality is poor is a problem to be solved.

In view of the above problems, embodiments of the present disclosure will be described in detail below.

FIG. 2 is a schematic flow diagram of a wireless communication method according to an embodiment of the present disclosure. The method of FIG. 2 may be performed by the first terminal device. The first terminal device may be any of the types of terminal devices mentioned above. For example, the first terminal device may be a terminal device that supports a reception function for an alert signal. As another example, the first terminal device may be a terminal device that supports an NTN function.

In some implementations, the first terminal device may be a terminal device in an RRC disconnected state. For example, the first terminal device may be in an RRC idle state. As another example, the first terminal device may be in an RRC inactive state.

Referring to FIG. 2, in step S210, the first terminal device performs cell selection according to a first criterion. The first criterion corresponds to (or is associated with) an alert signal.

In some implementations, the alert signal may be associated with a paging failure of the terminal device. For example, the alert signal may be sent as a prompt or notification to the terminal device when the terminal device fails to paging. After receiving the alert signal, the user of the terminal device may move to an area with better signal quality to receive a paging message.

In some implementations, the first criterion corresponding to the alert signal may include: the first criterion corresponding to reception of the alert signal; or, the first criterion being used to receive/detect the alert signal; the first criterion being a cell selection criterion introduced for a terminal device having an alert-signal reception capability.

By introducing a new cell selection criterion, the terminal device can normally camp in the cell to receive an alert signal even when the channel quality is poor.

In some implementations, the first criterion may include a second criterion and/or a third criterion. Hereinafter, the second criterion and the third criterion are illustrated in detail, respectively.

Second criterion:

The second criterion may be used for the terminal device to perform cell selection based on signal received power and/or signal receiving quality of a cell, and the second criterion corresponds to the alert signal. For example, the second criterion may be referred to as an S 'criterion.

In some implementations, the signal received power of a cell may refer to RSRP.

In some implementations, the signal receiving quality of a cell may refer to RSRQ.

In some implementations, the second criterion may include that measurement value(s) of the signal received power and/or signal receiving quality of the terminal device in the current cell is above a threshold.

In some implementations, the second criterion is associated with one or more of: a cell selection reception level value (which may be represented by Srxlev); a cell selection quality value (which may be represented by Squal); a first parameter for indicating a threshold of a cell selection reception level value and/or a cell selection quality value; and a second parameter for determining a cell selection reception level value and/or a cell selection quality value.

In some implementations, the case of the second criterion corresponding to the alert signal may include: a threshold and/or parameter associated with the second criterion correspond to the alert signal.

In some implementations, the first parameter associated with the second criterion corresponds to the alert signal. For example, the first parameter associated with the first criterion may be determined based on configuration information of the alert signal.

In some implementations, the value of the first parameter is less than a threshold corresponding to a fourth criterion. The fourth criterion may be used for cell selection, and the fourth criterion is not associated with the alert signal. For example, the fourth criterion may be an S criterion for cell selection provided in the related art.

In some implementations, the value of the first parameter may be configured by a network device or may be a predefined value. For example, the value of the first parameter may be less than 0, that is, the value of the first parameter may be a negative number.

As an example, the related art provides the S criterion as Srxlev > 0 and Squal > 0. Different from the S criterion, the second criterion provided in the embodiments of the present disclosure may be defined as: Srxlev > rxlev_threshold1, Squal > qual_threshold2. Srxlev represents a cell selection reception level value, and Squal a cell selection quality value.

Srxlev and Squal may be calculated using the same or similar parameters as the S criterion. The S criterion is different from the second criterion in that, in the S criterion, the thresholds corresponding to Srxlev and Squal are 0, while the thresholds rxlev _ threshold1 and qual _ threshold2 corresponding to the second criterion are negative numbers.

In some implementations, one or more parameters among the second parameter associated with the second criterion correspond to the alert signal.

In some implementations, the second parameter may include a third parameter, and the third parameter corresponds to the alert signal. The third parameter may be used to indicate a minimum requirement of the cell for signal received power and/or signal receiving quality. The third parameter may be represented by, for example, $Q_{rxlevmin1}$ and/or $Q_{qualmin1}$. The third parameter may be configured by a network device, for example, or the value of the third parameter may be a predefined value.

In some implementations, the value of the third parameter is less than a value corresponding to the minimum requirement of the cell for signal received power and/or signal receiving quality in the fourth criterion. The fourth criterion refers to a cell selection criterion that is not associated with the alert signal. For example, the fourth criterion may be an S criterion for cell selection provided in the related art.

As an example, the second criterion may be defined as: Srxlev > 0 and Squal > 0; where:

$$\mathrm{Srxlev} = Q_{rxlevmeasures}\text{-}(Q_{rxlevmin1} + Q_{rxlevminoffset})\text{-}P_{compensation}\text{-}Q_{offsettemp};$$

$$\mathrm{Squal} = Q_{qualmeas}\text{-}(Q_{qualmin1} + Q_{qualminoffset})\text{-}Q_{offsettemp}.$$

In the above equation, $Q_{rxlevmin1}$ represents the minimum requirement of the cell for signal received power, and $Q_{qualmin1}$ represents the minimum requirement for signal receiving quality. $Q_{rxlevmin1}$ and $Q_{qualmin1}$ may correspond to the aforementioned third parameter. $Q_{rxlevmin1}$ and $Q_{qualmin1}$ here are different from $Q_{rxlevmin}$ and $Q_{qualmin}$ in the S criterion. For example , $Q_{rxlevmin1} < Q_{rxlevmin}$, $Q_{qualmin1} < Q_{qualmin}$. $Q_{rxlevmeas}$ represents a measurement value of the RSRP of the terminal device in the cell; $Q_{rxlevmeas}$ represents a measurement value of the RSRQ of the terminal device in the cell; $P_{compensation}$ represents power compensation due to low power of the terminal device; $Q_{rxlevminoffset}$ represents an offset value of $Q_{rxlevmin}$. $Q_{offsettemp}$ represents a temporary offset value (which may be notified via system broadcast); and $Q_{qualminoffset}$ represents an offset value of $Q_{qualmin}$.

In some implementations, the second parameter includes a fourth parameter, and the fourth parameter corresponds to the alert signal. The fourth parameter is used to indicate an offset value of the third parameter; and the third parameter is used to indicate the minimum requirement of the cell for signal received power and/or signal receiving quality.

In some implementations, the value of the fourth parameter may be configured by a network device or may be a predefined value.

In some implementations, the cell selection reception level value (Srxlev) and/or the cell selection quality value (Squal) associated with the second criterion may be determined based on a difference between the third parameter and the fourth parameter, and the value of the fourth parameter is greater than 0.

In some implementations, the cell selection reception level value (Srxlev) and/or the cell selection quality value (Squal) associated with the second criterion may be determined based on a sum of the third parameter and the fourth parameter, and the value of the fourth parameter is less than 0.

As an example, the first criterion may be defined as: Srxlev > 0 and Squal > 0; where:

$$\mathrm{Srxlev}=Q_{rxlevmeas}\text{-}(Q_{rxlevmin}\text{-}Qoffset_{rxlevmin}+Q_{rxlevminoffset})\text{-}P_{compensation}\text{-}Qoffset_{temp};$$

$$\mathrm{Squal}=Q_{qualmeas}\text{-}(Q_{qualmin}\text{-}Qoffset_{qualmin}+Q_{qualminoffset})\text{-}Qoffset_{temp}.$$

In the above equation, $Q_{offsetrxlevmin}$ and $Q_{offsetqualmin}$ are newly introduced parameters, compared to the S criterion. Further, $Q_{offsetrxlevmin} > 0$, and $Q_{offsetqualmin} > 0$.

The second criterion is described in detail above, and the third criterion is described in detail below.

The third criterion may be used for the terminal device to perform cell selection based on a location. In other words, the third criterion is an evaluation criterion based on the location of the terminal device. For example, the third criterion may determine based on the location of the terminal device that the terminal device is within cell (e.g., satellite cell) coverage.

In some implementations, the third criterion is associated with one or more of: a location of the terminal device; a location of a ground reference point of the cell; a location of a satellite; a distance between the terminal device and the cell ground reference point; a distance between the terminal device and the satellite; signal transmission time between the terminal device and the satellite; and a timing advance of a service link between the terminal device and the satellite.

For example, the third criterion includes that the terminal device satisfies the third criterion when the distance between the terminal device and the ground reference point of the current cell is less than or equal to a first threshold. The first threshold may be configured by a network device or may be a predefined value. The ground reference point may be, for example, a central location of the cell.

As another example, the third criterion includes that when the distance between the terminal device and the satellite corresponding to the current cell is less than or equal to a second threshold, the terminal device satisfies the third criterion. The second threshold may be configured by the network device or may be a predefined value.

As another example, the third criterion includes that when the signal transmission time between the terminal device and the satellite corresponding to the current cell is less than or equal to a third threshold, the terminal device satisfies the third criterion. The third threshold may be configured by the network device or may be a predefined value. The time of signal transmission between the terminal device and the satellite corresponding to the current cell may refer to time of a one-way transmission between the terminal device and the satellite or the satellite to the terminal device, or may refer to time of a round-trip transmission between the terminal device and the satellite.

For another example, the third criterion includes that when the timing advance amount of the service link between the terminal device and the current cell is less than or equal to a fourth threshold, the terminal device satisfies the third criterion. The fourth threshold may be configured by the network device or may be a predefined value. The service link may refer to a link between the terminal device and the network device (such as a satellite).

The cell selection criterion corresponding to the alert signal proposed in the embodiment of the present disclosure has been described in detail above, and an example of how the terminal device performs cell selection based on the first criterion will be described in detail below.

In some implementations, when the second criterion is satisfied, the first terminal device determines that the current cell satisfies a camping condition or a cell selection criterion. That is, if the second criterion is satisfied, the first terminal device may normally camp in the current cell.

Further, in some implementations, the first terminal device may determine that the current cell satisfies the camping condition or the cell selection criterion when the second criterion is satisfied in one or more of the following cases:

only the second criterion is introduced, while the third criterion is not introduced;
both the second criterion and the third criterion are introduced, but the network device configures the second criterion only; and
both the second criterion and the third criterion are introduced, and the network device configures both the second criterion and the third criterion, but the first terminal device does not support the third criterion or the first terminal device does not acquire its own current location information.

In some implementations, when the third criterion is satisfied, the first terminal device determines that the current cell satisfies the camping condition or the cell selection criterion. That is, if the third criterion is satisfied, the first terminal device may normally camp in the current cell.

Further, in some implementations, the first terminal device may determine that the current cell satisfies the camping condition or the cell selection criterion when the third criterion is satisfied in one or more of the following cases:

only the third criterion is introduced, while the second criterion is not introduced;
both the second criterion and the third criterion are introduced, but the network device configures the third criterion only;
both the second criterion and the third criterion are introduced, and the network device configures both the second criterion and the third criterion, but the first terminal device does not support the second criterion or the first terminal device does not measure the RSRP or RSRQ of the current cell.

In some implementations, when both the second criterion and the third criterion are satisfied, the first terminal device determines that the current cell satisfies the camping condition or the cell selection criterion. That is, if both the second criterion and the third criterion are satisfied, the first terminal device may normally camp in the current cell.

In some implementations, when the second criterion is satisfied or the third criterion is satisfied, the first terminal device determines that the current cell satisfies the camping condition or the cell selection criterion. That is, if the second criterion is satisfied or the third criterion is satisfied, the first terminal device may normally camp in the current cell.

In some implementations, when the terminal device does not satisfy the S criterion in any cell and does not satisfy the second or third criteria mentioned above in all cells supporting the alert function, the terminal device may enter any cell selection state.

In some implementations, as shown in FIG. 3, the wireless communication method provided by an embodiment of the present disclosure may further include step S310, that is, the first terminal device receives first configuration information from a network device. The first configuration information corresponds to the alert signal. In other words, the first configuration information is configuration information related to the alert signal. For example, the first configuration information is used to configure the alert signal. Step S310 may be executed before step S210, for example.

In some implementations, the first configuration information may be transmitted by the network device via broadcasting. For example, the network device may broadcast cell information including the first configuration information.

In some implementations, the first configuration information includes first information. The first information is used to indicate whether a current cell supports transmission of the alert signal. In other words, the first information is used to indicate whether the current cell (or the current base station) supports the function of transmitting the alert signal.

In some implementations, the first configuration information includes second information. The second information is used to configure time-frequency resources of the alert signal. In other words, the second information is used to configure time-frequency resources for the first terminal device to monitor the alert signal.

In some implementations, the first configuration information includes third information. The third information indicates a threshold for determining whether the first criterion is satisfied. As mentioned above, the first criterion includes the second criterion and/or the third criterion, and the second criterion and/or the third criterion may determine whether the terminal device satisfies the cell selection criterion based on a threshold, and the threshold mentioned herein may be configured by the third information.

In some implementations, before executing step S210, the first terminal device may first determine whether the current cell supports transmission of the alert signal and/or whether the first terminal device has the ability to receive the alert signal. As an example, if the current cell supports transmission of the alert signal and the first terminal device has the ability to receive the alert signal, the first terminal device may perform step S210 in addition to following the S criterion.

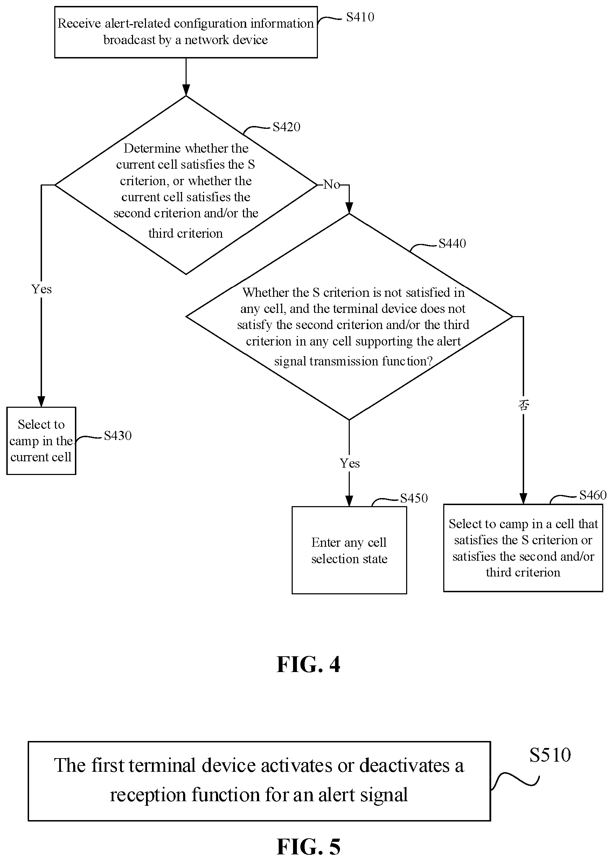

Hereinafter, embodiments of the present disclosure will be described in more detail with reference to specific examples. It should be noted that the example shown by FIG. 4 is merely to help those skilled in the art understand the embodiments of the present disclosure, and is not intended to limit the embodiments of the present disclosure to the specific numerical values or specific scenarios as illustrated. It will be apparent to those skilled in the art that various equivalent modifications or changes can be made based on the example given in FIG. 4, and such modifications or changes also fall within the scope of the embodiments of the present disclosure. The method in FIG. 4 may be performed by a terminal device, such as the first terminal device mentioned above.

Referring to FIG. 4, in step S410, alert-related configuration information (corresponding to the first configuration information above) broadcast by a network device is received.

In step S420, it is determined whether the current cell satisfies the S criterion, or whether the current cell satisfies the second criterion and/or the third criterion mentioned above. If the current cell satisfies the S criterion, or if the current cell satisfies the second criterion and/or the third criterion mentioned above, step S430 is executed; otherwise, step S440 is executed.

In step S430, it is selected to camp in the current cell (in which case the terminal device may be in a camped Normally state).

In step S440, if the terminal device determines that the S criterion is not satisfied in any cell, and the terminal device does not satisfy the second criterion and/or the third criterion in any cell supporting the alert-signal transmission function, step S450 is executed; otherwise, step S460 is executed.

In step S450, the terminal device enters an any cell selection state.

In step S460, the terminal device selects to camp in a cell that satisfies the S criterion or satisfies the second criterion and/or the third criterion (in which case, the terminal device may be in a camped Normally state).

For the terminal device with the ability to receive the alert signal, if the terminal device can normally receive a paging message, it does not need to receive the alert signal. Therefore, it is necessary to introduce an activation/deactivation mechanism for alert signal reception. Referring to Figure 5, the activation/deactivation mechanism of alert signal reception is described in detail.

FIG. 5 is a schematic flow diagram of a wireless communication method according to an embodiment of the present disclosure. The method in FIG. 5 may be performed by a first terminal device. The first terminal device may be any of the types of terminal devices mentioned above. For example, the first terminal device may be a terminal device that supports reception of an alert signal. As another example, the first terminal device may be a terminal device that supports an NTN function.

In some implementations, the first terminal device may be a terminal device in an RRC disconnected state. For example, the first terminal device may be a terminal device in an RRC idle state. As another example, the first terminal device may be a terminal device in an RRC inactive state.

Referring to FIG. 5, in step S510, the first terminal device activates or deactivates a reception function for an alert signal.

In some implementations, the activation or deactivation of the reception function for the alert signal may be determined based on a first condition. The first condition is associated with one or more of the following: signal received power of a cell; signal reception quality of the cell; a detection result of a first channel, wherein the first channel is used for scheduling paging information of the first terminal device; and a reception result of a second channel, wherein the second channel is used for carrying paging information of the first terminal device.

In some implementations, the signal received power of a cell may refer to RSRP. The signal receiving quality of a cell may refer to RSRQ. That is, the first terminal device may determine to activate or deactivate the reception function for the alert signal based on the RSRP/RSRQ.

In some implementations, the first channel refers to a PDCCH for scheduling paging information of the first terminal device. The second channel refers to a PDSCH for carrying paging information of the first terminal device. That is, the first terminal device may determine to activate or deactivate the reception function for the alert signal based on the detection/reception situation of the PDCCH/PDSCH.

The embodiment of the present disclosure introduces the activation/deactivation mechanism of alert signal reception based on channel quality or paging reception state. In this way, the terminal device can receive an alert signal when the signal environment is poor, but does not need to receive the alert signal when the channel environment is good. By adopting this scheme, on one hand, system resources can be saved, on the other hand, the increase of power consumption of the terminal device caused by unnecessary alert signal reception can be reduced.

In some implementations, the first condition includes: when the signal received power and/or the signal receiving quality (such as RSRP and/or RSRQ) of the cell is lower than or equal to a first threshold, the first terminal device activates the reception function for an alert signal. That is, if the signal received power and/or the signal receiving quality of the cell is lower than or equal to the first threshold, the first terminal device receives the alert signal.

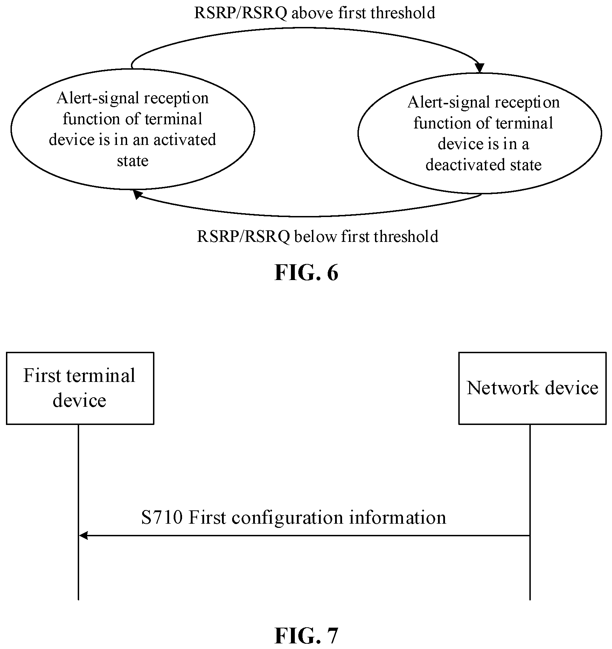

In some implementations, referring to FIG. 6, the first condition includes: when the signal received power and/or the signal receiving quality (such as RSRP and/or RSRQ) of the cell is higher than or equal to a first threshold, the first terminal device deactivates the reception function for the alert signal. That is, if the signal received power and/or the signal receiving quality of the cell is lower than or equal to the first threshold, the first terminal device does not receive the alert signal.

In some implementations, the first threshold may be configured by a network device or may be a predefined value.

In some implementations, the first condition includes: when the signal received power and/or the signal receiving quality (e.g., RSRP and/or RSRQ) of the cell is lower than or equal to a second threshold for a first time period (i.e., a duration), the first terminal device activates the reception function for the alert signal.

In some implementations, the first condition includes: when the signal received power and/or the signal receiving quality (e.g., RSRP and/or RSRQ) of the cell is higher than or equal to the second threshold for a first time period (i.e., a duration), the first terminal device deactivates the reception function for the alert signal.

In some implementations, the second threshold may be configured by the network device or may be a predefined value.

In some implementations, the length of the first time period may be configured by the network device or may be a predefined value.

In some implementations, the first condition includes: when the reception function for the alert signal of the first terminal device is in a deactivated state, and the signal received power and/or signal receiving quality (such as RSRP and/or RSRQ) of the cell is lower than or equal to a third threshold, the first terminal device activates the reception function for the alert signal.

In some implementations, the third threshold may be configured by the network device or may be a predefined value.

In some implementations, the first condition includes: when the reception function for the alert signal of the first terminal device is in an activated state, and the signal received power and/or signal receiving quality (such as RSRP and/or RSRQ) of the cell is higher than or equal to a fourth threshold, the first terminal device deactivates the reception function for the alert signal.

In some implementations, the fourth threshold may be configured by the network device or may be a predefined value. Further, in some implementations, the third threshold is less than or equal to the fourth threshold.

In some implementations, the first condition includes that the first terminal device activates the reception function for the alert signal when the reception function for the alert signal of the first terminal device is in a deactivated state, and the signal received power and/or signal receiving quality (such as RSRP and/or RSRQ) of the cell is lower than or equal to the third threshold in a second time period (i.e., a duration).

In some implementations, the third threshold may be configured by the network device or may be a predefined value.

In some implementations, the length of the second time period may be configured by the network device or may be a predefined value.

In some implementations, the first condition includes: when the reception function for the alert signal of the first terminal device is in an activated state, and the signal received power and/or signal receiving quality (such as RSRP and/or RSRQ) of the cell is higher than or equal to a fourth threshold in a second time period, the first terminal device deactivates the reception function for the alert signal.

In some implementations, the fourth threshold may be configured by the network device or may be a predefined value. Further, in some implementations, the third threshold is less than or equal to the fourth threshold.

In some implementations, the length of the second time period may be configured by the network device or may be a predefined value.

In some implementations, the first condition includes: if the first terminal device fails to detect the first channel (e.g., PDCCH, which is used to schedule paging information of the first terminal device), the first terminal device activates the reception function for the alert signal.

In some implementations, the first condition includes: if the first terminal device fails to detect the first channel (such as PDCCH, which is used to schedule paging information of the first terminal device) for N1 consecutive times, the first terminal device activates the reception function for the alert signal, where N1 is a positive integer greater than 1. The value of N1 may be configured by the network device or may be a predefined value.

In some implementations, the first condition includes: if the first terminal device fails to receive the second channel (such as PDSCH, which is used to carry paging information of the first terminal device), the first terminal device activates the reception function for the alert signal.

In some implementations, the first condition includes: if the first terminal device fails to receive the second channel (such as PDSCH, which is used to carry paging information of the first terminal device) for N2 consecutive times, the first terminal device activates the reception function for the alert signal, where N2 is a positive integer greater than 1. The value of N2 may be configured by the network device or may be a predefined value.

In some implementations, the first condition includes: if the first terminal device continuously fails to detect the first channel (such as PDSCH, which is used to carry paging information of the first terminal device) within a third time period, the first terminal device activates the reception function for the alert signal. The length of the third time period may be configured by the network device or may be a predefined value.

In some implementations, the first condition includes: if the first terminal device continuously fails to receive the second channel (such as PDSCH, which is used to carry paging information of the first terminal device) within a fourth time period, the first terminal device activates the reception function for the alert signal. The length of the fourth time period may be configured by the network device or may be a predefined value.

In some implementations, the first condition includes: if the first terminal device fails to detect the first channel (such as PDCCH, which is used to schedule paging information of the first terminal device) more than or equal to N3 times in a fifth time period, the first terminal device activates the reception function for the alert signal, where N3 is a positive integer greater than or equal to 1.

In some implementations, the value of N3 may be configured by the network device or may be a predefined value.

In some implementations, the length of the fifth time period may be configured by the network device or may be a predefined value.

In some implementations, the first condition includes: if the first terminal device fails to receive the second channel more than or equal to N4 times in a sixth time period, the first terminal device activates the reception function for the alert signal, where N4 is a positive integer greater than or equal to 1.

In some implementations, the value of N4 may be configured by the network device or may be a predefined value.

In some implementations, the length of the sixth time period may be configured by the network device or may be a predefined value.

In some implementations, the first condition includes: if the first terminal device successfully detects the first channel (such as PDCCH, which is used to schedule paging information of the first terminal device), the first terminal device deactivates the reception function for the alert signal.

In some implementations, the first condition includes: if the first terminal device successfully detects the first channel for N5 consecutive times, the first terminal device deactivates the reception function for the alert signal, where N5 is a positive integer greater than 1.

In some implementations, the value of N5 may be configured by the network device or may be a predefined value.

In some implementations, the first condition includes: if the first terminal device successfully receives the second channel (such as PDSCH, which is used to carry paging information of the first terminal device), the first terminal device deactivates the reception function for the alert signal.

In some implementations, the first condition includes: if the first terminal device successfully receives the second channel (such as PDSCH, which is used to carry paging information of the first terminal device) for N6 consecutive times, the first terminal device deactivates the reception function for the alert signal, where N6 is a positive integer greater than 1.

In some implementations, the value of N6 may be configured by the network device or may be a predefined value.

In some implementations, the first condition includes: if the first terminal device continuously detects the first channel (such as PDCCH, which is used to schedule paging information of the first terminal device) successfully within a seventh time period, the first terminal device deactivates the reception function for the alert signal.

In some implementations, the length of the seventh time period may be configured by the network device or may be a predefined value.

In some implementations, the first condition includes: if the first terminal device continuously receives the second channel successfully within an eighth time period, the first terminal device deactivates the reception function for the alert signal.

In some implementations, the length of the eighth time period may be configured by the network device or may be a predefined value.

In some implementations, the first condition includes: if the first terminal device successfully detects the first channel more than or equal to N7 times in a ninth time period, the first terminal device deactivates the reception function for the alert signal, where N7 is a positive integer greater than or equal to 1.

In some implementations, the value of N7 may be configured by the network device or may be a predefined value.

In some implementations, the length of the ninth time period may be configured by the network device or may be a predefined value.

In some implementations, the first condition includes: if the first terminal device successfully receives the second channel equal to or more than N8 times in a tenth time period, the first terminal device deactivates the reception function for the alert signal, wherein N8 is a positive integer greater than or equal to 1.

In some implementations, the value of N8 may be configured by the network device or may be a predefined value.

In some implementations, the length of the tenth time period may be configured by the network device or may be a predefined value.

In some implementations, as shown in FIG. 7, the wireless communication method according to an embodiment of the present disclosure may further include step S710, in which the first terminal device receives first configuration information from a network device. The first configuration information corresponds to an alert signal. In other words, the first configuration information is configuration information related to the alert signal. For example, the first configuration information is used to configure the alert signal. Step S710 may be performed before step S510.

In some implementations, the first configuration information may be transmitted by the network device by broadcasting. For example, the network device may broadcast cell information including the first configuration information.

In some implementations, the first configuration information includes first information. The first information is used to indicate whether a current cell supports transmission of the alert signal. In other words, the first information is used to indicate whether the current cell (or the current base station) supports the function of transmitting the alert signal.

In some implementations, the first configuration information includes second information. The second information is used to configure time-frequency resources of the alert signal. In other words, the second information is used to configure time-frequency resources for the first terminal device to monitor the alert signal.

In some implementations, the first configuration information includes fourth information. The fourth information indicates a threshold for activating or deactivating a reception function for the alert signal. The threshold may include, for example, one or more of the first to fourth thresholds mentioned above.

In some implementations, before executing step S510, the first terminal device may first determine whether the current cell supports transmission of the alert signal and/or the first terminal device may determine whether it has the ability to receive the alert signal. As an example, if the current cell supports transmission of the alert signal, and the first terminal device has the ability to receive the alert signal, the terminal device executes step S510.

It should be noted that the alert signal mentioned in any of the above embodiments may also be referred to as or replaced with an alert message.

It should also be noted that the alert signal (or alert message) mentioned in any of the foregoing embodiments may be received through monitoring. Therefore, the reception of the alert signal mentioned in any of the above embodiments may also be referred to as or replaced with monitoring of the alert signal (or alert message). Accordingly, the reception function for the alert signal (or alert message) may be referred to as or replaced with the monitoring function for the alert signal.

It should also be noted that the foregoing describes introducing a new cell selection criterion (that is, the first criterion mentioned above) and/or an activation/deactivation function for an alert signal as an example. However, the embodiments of the present disclosure may also be apply to other signal. Therefore, in some implementations, the aforementioned alert signal may be replaced with a first type of signal. The first type of signal may be an alert signal, or may be other similar signals subsequently occurring in the communication system.

The above-mentioned first criterion corresponds to an alert signal, which may mean that the first criterion is associated with reception of the alert signal. Alternatively, the first criterion is used to receive the alert signal.

It should also be noted that the cell mentioned in any of the above embodiments may refer to a satellite cell or an NTN cell.

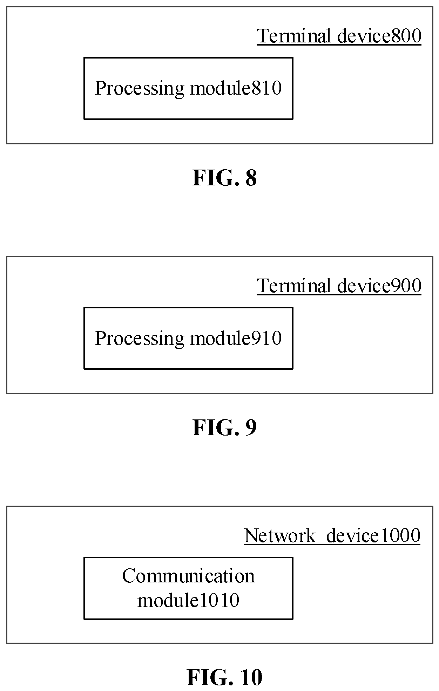

Embodiments of the method of the present disclosure are described in detail above with reference to FIGS. 1 to 7, and embodiments of the device of the present disclosure are described in detail below with reference to FIGS. 8 to 11. It should be understood that the description of the method embodiments and the description of the device embodiments correspond to each other, and therefore, the portions not described in detail below may refer to those in the foregoing method embodiments.

FIG. 8 is a schematic structural diagram of a terminal device according to an embodiment of the present disclosure. The terminal device 800 illustrated in FIG. 8 may be the first terminal device mentioned in the embodiment of FIG. 2. The terminal device 800 may include a processing module 810. The processing module 810 is configured to perform cell selection according to a first criterion. The first criterion corresponds to an alert signal.

In some implementations, the first criterion includes: a second criterion which is used for the terminal device to perform cell selection based on signal received power and/or signal receiving quality of the cell; and a third criterion which is used for the terminal device to perform cell selection based on a location.

In some implementations, the second criterion is associated with one or more of: a first parameter for indicating a threshold of a cell selection reception level value and/or a cell selection quality value; and a second parameter for determining the cell selection reception level value and/or the cell selection quality value.

In some implementations, the first parameter corresponds to the alert signal.

In some implementations, the value of the first parameter is less than a threshold corresponding to a fourth criterion for cell selection, the fourth criterion being not associated with the alert signal.

In some implementations, the value of the first parameter is less than 0.

In some implementations, one or more than one parameter among the second parameters corresponds to the alert signal.

In some implementations, the second parameter includes a third parameter for indicating a minimum requirement of a cell for signal received power and/or signal receiving quality, and the third parameter corresponds to the alert signal.

In some implementations, the second parameter includes a fourth parameter, the fourth parameter is used to indicate an offset value of a third parameter, the third parameter is used to indicate a minimum requirement of a cell for signal received power and/or signal receiving quality, and the fourth parameter corresponds to the alert signal.

In some implementations, the cell selection reception level value and/or cell selection quality value may be determined based on a difference between the third parameter and the fourth parameter, and the value of the fourth parameter is greater than 0; alternatively, the cell selection reception level value and/or the cell selection quality value may be determined based on a sum of the third parameter and the fourth parameter, and the value of the fourth parameter is less than 0.

In some implementations, the third criterion is associated with one or more of: a location of the terminal device; a location of a ground reference point of the cell; a location of a satellite; a distance between the terminal device and the cell ground reference point; a distance between the terminal device and the satellite; signal transmission time between the terminal device and the satellite; a timing advance of a service link between the terminal device and the satellite.

In some implementations, the third criterion includes one or more of followings: the terminal device satisfies the third criterion when the distance between the terminal device between the ground reference point of the current cell is less than or equal to a first threshold; when the distance between the terminal device and the satellite corresponding to the current cell is less than or equal to a second threshold, the terminal device satisfies the third criterion; when the signal transmission time between the terminal device and the satellite corresponding to the current cell is less than or equal to a third threshold, the terminal device satisfies the third criterion; and when the timing advance of the service link between the terminal device and the current cell is less than or equal to a fourth threshold, the terminal device satisfies the third criterion.

In some implementations, the processing module 810 is configured to: determine, by the first terminal device, that the current cell satisfies a camping condition or a cell selection criterion when the second criterion is satisfied; alternatively, when both the second criterion and the third criterion are satisfied, the first terminal device determines that the current cell satisfies a camping condition or a cell selection criterion; alternatively, when the second criterion is satisfied or the third criterion is satisfied, the first terminal device determines that the current cell satisfies a camping condition or a cell selection criterion.

In some implementations, the terminal device 800 may further include a communication module configured to receive first configuration information from the network device, and the first configuration information corresponds to the alert signal.

In some implementations, the first configuration information includes one or more of the following information: first information indicating whether a current cell supports transmission of the alert signal; second information for configuring time-frequency resources of the alert signal; and third information indicating a threshold for determining whether the first criterion is satisfied.

FIG. 9 is a schematic structural diagram of a terminal device according to another embodiment of the present disclosure. The terminal device 900 shown in FIG. 9 may be the first terminal device in the embodiment of FIG. 5 described above. The terminal device 900 includes a processing module 910. The processing module 910 is configured to activate or deactivate a reception function for an alert signal.

In some implementations, activation or deactivation of the reception function for the alert signal may be determined based on a first condition associated with one or more of the following information: signal received power of a cell; signal reception quality of the cell; a detection result of a first channel, wherein the first channel is used for scheduling paging information of the first terminal device; and a reception result of a second channel, wherein the second channel is used for carrying paging information of the first terminal device.

In some implementations, the first condition includes: when the signal received power and/or the signal receiving quality of the cell is lower than or equal to a first threshold, the first terminal device activates the reception function for the alert signal; alternatively, when the signal received power and/or the signal receiving quality of the cell is higher than or equal to the first threshold, the first terminal device deactivates the reception function for the alert signal.

In some implementations, the first condition includes: when the signal received power and/or the signal receiving quality of the cell is lower than or equal to a second threshold within a first time period, the first terminal device activates the reception function for the alert signal; alternatively, when the signal received power and/or the signal receiving quality of the cell is higher than or equal to the second threshold within the first time period, the first terminal device deactivates the reception function for the alert signal.

In some implementations, the first condition includes: when the reception function for the alert signal of the first terminal device is in a deactivated state, and the signal received power and/or signal receiving quality of the cell is lower than or equal to a third threshold, the first terminal device activates the reception function for the alert signal; alternatively, when the alert signal reception function for the first terminal device is in an activated state, and the signal received power and/or the signal receiving quality of the cell is higher than or equal to the fourth threshold, the first terminal device deactivates the alert signal reception function.

In some implementations, the first condition includes: when the reception function for the alert signal of the first terminal device is in a deactivated state, and the signal received power and/or the signal receiving quality of the cell is lower than or equal to a third threshold within a second time period, the first terminal device activates the reception function for the alert signal; alternatively, if the alert signal reception function for the first terminal device is in an activated state, and the signal received power and/or the signal receiving quality of the cell is higher than or equal to the fourth threshold in a second time period, the first terminal device deactivates the alert signal reception function.

In some implementations, the first condition includes one or more of the following: if the first terminal device fails to detect the first channel, the first terminal device activates the reception function for the alert signal; if the first terminal device fails to detect the first channel for N1 consecutive times, the first terminal device activates the reception function for the alert signal, where N1 is a positive integer greater than 1; if the first terminal device fails to receive the second channel, the first terminal device activates the reception function for the alert signal; if the first terminal device fails to receive the second channel for N2 consecutive times, the first terminal device activates the reception function for the alert signal, where N2 is a positive integer greater than 1; if the first terminal device continuously fails to detect the first channel within a third time period, the first terminal device activates the reception function for the alert signal; if the first terminal device continuously fails to receive the second channel within a fourth time period, the first terminal device activates the reception function for the alert signal; if the first terminal device fails to detect the first channel more than or equal to N3 times in a fifth time period, the first terminal device activates the reception function for the alert signal, where N3 is a positive integer greater than or equal to 1; and if the first terminal device fails to receive the second channel more than or equal to N4 times in a sixth time period, the first terminal device activates the reception function for the alert signal, where N4 is a positive integer greater than or equal to 1.

In some implementations, the first condition includes one or more of the following: in a case that the first terminal device successfully detects the first channel, the first terminal device deactivates the reception function for the alert signal; in a case that the first terminal device successfully detects the first channel for N5 consecutive times, the first terminal device deactivates the reception function for the alert signal, where N5 is a positive integer greater than 1; in a case that the first terminal device successfully receives the second channel, the first terminal device deactivates the reception function for the alert signal; in a case that the first terminal device successfully receives the second channel for N6 consecutive times, the first terminal device deactivates the reception function for the alert signal, where N6 is a positive integer greater than 1; in a case that the first terminal device continuously detects the first channel successfully within a seventh time period, the first terminal device deactivates the reception function for the alert signal; in a case that the first terminal device continuously receives the second channel successfully within an eighth time period, the first terminal device deactivates the reception function for the alert signal; in a case that the first terminal device successfully detects the first channel more than or equal to N7 times in a ninth time period, the first terminal device deactivates the reception function for the alert signal, where N7 is a positive integer greater than or equal to 1; and in a case that the first terminal device successfully receives the second channel more than or equal to N8 times in a tenth time period, the first terminal device deactivates the reception function for the alert signal, where N8 is a positive integer greater than or equal to 1.

In some implementations, the terminal device 900 may further include a communication module configured to receive first configuration information from a network device, and the first configuration information corresponds to the alert signal.

In some implementations, the first configuration information includes one or more of the following information: first information indicating whether a current cell supports transmission of the alert signal; second information for configuring time-frequency resources of the alert signal; and fourth information indicating a threshold for activating or deactivating the reception function for the alert signal.

FIG. 10 is a schematic structural diagram of a network device according to an embodiment of the present disclosure. The network device 1000 illustrated in FIG. 10 may correspond to the network device mentioned in any of the above embodiments. The network device 1000 may include a communication module 1010. The communication module 1010 is configured to transmit first configuration information to a first terminal device, and the first configuration information corresponds to an alert signal.

In some implementations, the first configuration information includes one or more of the following information: first information indicating whether a current cell supports transmission of the alert signal; second information for configuring time-frequency resources of the alert signal; third information indicating a threshold for determining whether a first criterion is satisfied, the first criterion corresponding to the alert signal; and fourth information indicating a threshold for activating or deactivating a reception function for the alert signal.

In some implementations, the first criterion includes: a second criterion used for the terminal device to perform cell selection based on signal received power and/or signal receiving quality of the cell; and a third criterion used for the terminal device to perform cell selection based on a location.

In some implementations, the second criterion is associated with one or more of: a first parameter for indicating a threshold of a cell selection reception level value and/or a cell selection quality value; and a second parameter for determining the cell selection reception level value and/or the cell selection quality value.

In some implementations, the first parameter corresponds to the alert signal.

In some implementations, the value of the first parameter is less than a threshold corresponding to a fourth criterion for cell selection, and the fourth criterion is not associated with the alert signal.

In some implementations, the value of the first parameter is less than 0.

In some implementations, one or more than one parameter among the second parameters corresponds to the alert signal.

In some implementations, the second parameter includes a third parameter for indicating a minimum requirement of a cell for signal received power and/or signal receiving quality, and the third parameter corresponds to the alert signal.

In some implementations, the second parameter includes a fourth parameter, the fourth parameter is used to indicate an offset value of a third parameter, the third parameter is used to indicate a minimum requirement of a cell for signal received power and/or signal receiving quality, and the fourth parameter corresponds to the alert signal.

In some implementations, the cell selection reception level value and/or cell selection quality value may be determined based on a difference between the third parameter and the fourth parameter, and the value of the fourth parameter is greater than 0; alternatively, the cell selection reception level value and/or the cell selection quality value may be determined based on a sum of the third parameter and the fourth parameter, and the value of the fourth parameter is less than 0.

In some implementations, the third criterion is associated with one or more of: a location of the terminal device; a location of a ground reference point of the cell; a location of a satellite; a distance between the terminal device and the cell ground reference point; a distance between the terminal device and the satellite; signal transmission time between the terminal device and the satellite; and a timing advance of a service link between the terminal device and the satellite.

In some implementations, the third criterion includes one or more of: the terminal device satisfies the third criterion when the distance between the terminal device between the ground reference point of the current cell is less than or equal to a first threshold; when the distance between the terminal device and the satellite corresponding to the current cell is less than or equal to a second threshold, the terminal device satisfies the third criterion; when the signal transmission time between the terminal device and the satellite corresponding to the current cell is less than or equal to a third threshold, the terminal device satisfies the third criterion; and when the timing advance of the service link between the terminal device and the current cell is less than or equal to a fourth threshold, the terminal device satisfies the third criterion.

In some implementations, when the second criterion is satisfied, the current cell satisfies a camping condition or a cell selection criterion; alternatively, when both the second criterion and the third criterion are satisfied, the current cell satisfies a camping condition or a cell selection criterion; alternatively, when the second criterion is satisfied or the third criterion is satisfied, the current cell satisfies a camping condition or a cell selection criterion.

In some implementations, activation or deactivation of the reception function for the alert signal may be determined based on a first condition associated with one or more of the following information: signal received power of a cell; signal reception quality of the cell; a detection result of a first channel, wherein the first channel is used for scheduling paging information of the first terminal device; and a reception result of a second channel, wherein the second channel is used for carrying paging information of the first terminal device.

In some implementations, the first condition includes: when the signal received power and/or the signal receiving quality of the cell is lower than or equal to a first threshold, the first terminal device activates the reception function for the alert signal; alternatively, when the signal received power and/or the signal receiving quality of the cell is higher than or equal to the first threshold, the first terminal device deactivates the reception function for the alert signal.

In some implementations, the first condition includes: when the signal received power and/or the signal receiving quality of the cell is lower than or equal to a second threshold within a first time period, the first terminal device activates the reception function for the alert signal; alternatively, when the signal received power and/or the signal receiving quality of the cell is higher than or equal to the second threshold within the first time period, the first terminal device deactivates the reception function for the alert signal.

In some implementations, the first condition includes: when the reception function for the alert signal of the first terminal device is in a deactivated state, and the signal received power and/or signal receiving quality of the cell is lower than or equal to a third threshold, the first terminal device activates the reception function for the alert signal; alternatively, when the alert signal reception function for the first terminal device is in an activated state, and the signal received power and/or the signal receiving quality of the cell is higher than or equal to a fourth threshold, the first terminal device deactivates the alert signal reception function.

In some implementations, the first condition includes: when the reception function for the alert signal of the first terminal device is in a deactivated state, and the signal received power and/or signal receiving quality of the cell is lower than or equal to a third threshold within a second time period, the first terminal device activates the reception function for the alert signal; alternatively, when the alert signal reception function for the first terminal device is in an activated state, and the signal received power and/or the signal receiving quality of the cell is higher than or equal to a fourth threshold in the second time period, the first terminal device deactivates the alert signal reception function.

In some implementations, the first condition includes one or more of the following: if the first terminal device fails to detect the first channel, the first terminal device activates the reception function for the alert signal; if the first terminal device fails to detect the first channel for N1 consecutive times, the first terminal device activates the reception function for the alert signal, where N1 is a positive integer greater than 1; if the first terminal device fails to receive the second channel, the first terminal device activates the reception function for the alert signal; if the first terminal device fails to receive the second channel for N2 consecutive times, the first terminal device activates the reception function for the alert signal, where N2 is a positive integer greater than 1; if the first terminal device continuously fails to detect the first channel within a third time period, the first terminal device activates the reception function for the alert signal; if the first terminal device continuously fails to receive the second channel within a fourth time period, the first terminal device activates the reception function for the alert signal; if the first terminal device fails to detect the first channel more than or equal to N3 times in a fifth time period, the first terminal device activates the reception function for the alert signal, where N3 is a positive integer greater than or equal to 1; if the first terminal device fails to receive the second channel more than or equal to N4 times in a sixth time period, the first terminal device activates the reception function for the alert signal, where N4 is a positive integer greater than or equal to 1.

In some implementations, the first condition includes one or more of the following: in a case that the first terminal device successfully detects the first channel, the first terminal device deactivates the reception function for the alert signal; in a case that the first terminal device successfully detects the first channel for N5 consecutive times, the first terminal device deactivates the reception function for the alert signal, where N5 is a positive integer greater than 1; in a case that the first terminal device successfully receives the second channel, the first terminal device deactivates the reception function for the alert signal; in a case that the first terminal device successfully receives the second channel for N6 consecutive times, the first terminal device deactivates the reception function for the alert signal, where N6 is a positive integer greater than 1; in a case that the first terminal device continuously detects the first channel successfully within a seventh time period, the first terminal device deactivates the reception function for the alert signal; in a case that the first terminal device successfully continuously receives the second channel within an eighth time period, the first terminal device deactivates the reception function for the alert signal; in a case that the first terminal device successfully detects the first channel more than or equal to N7 times in a ninth time period, the first terminal device deactivates the reception function for the alert signal, where N7 is a positive integer greater than or equal to 1; and in a case that the first terminal device successfully receives the second channel more than or equal to N8 times in a tenth time period, the first terminal device deactivates the reception function for the alert signal, wherein N8 is a positive integer greater than or equal to 1.

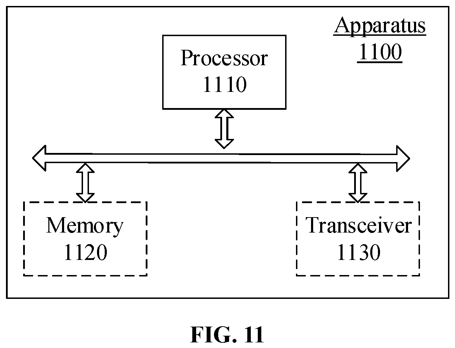

FIG. 11 is a schematic structural diagram of an apparatus according to an embodiment of the present disclosure. The dashed line in FIG. 11 indicates that the unit or module is optional. The apparatus 1100 may be used to implement the methods described in the method embodiments described above. The apparatus 1100 may be a chip, a terminal device, or a network device.

The apparatus 1100 may include one or more processors 1110. The processor 1110 may support the apparatus 1100 to implement the methods described in the above method embodiments. The processor 1110 may be a general-purpose processor or a specialpurpose processor. For example, the processor may be a central processing unit (CPU). Alternatively, the processor may also be another general purpose processor, a digital signal processor (DSP), an application specific integrated circuit (ASIC), an off-the-shelf programmable gate array (FPGA) or other programmable logic device, a discrete gate or transistor logic device, a discrete hardware component, or the like. The general purpose processor may be a microprocessor or the processor may be any conventional processor or the like.

The apparatus 1100 may also include one or more memories 1120. The memory 1120 has a program stored thereon that can be executed by the processor 1110 and cause the apparatus 1100 to perform the methods described in the above method embodiments. The memory 1120 may be independent of the processor 1110 or may be integrated in the processor 1110.

The apparatus 1100 may also include a transceiver 1130. The processor 1110 may communicate with other devices or chips through the transceiver 1130. For example, the processor 1110 may transmit and receive data to and from other devices or chips through the transceiver 1130.

An embodiment of the present disclosure also provides a computer-readable storage medium for storing a program. The computer-readable storage medium can be applied to the terminal device or the network device provided by the embodiments of the present disclosure, and the program causes a computer to execute the method performed by the terminal device or the network device in each embodiment of the present disclosure.

An embodiment of the present disclosure also provides a computer program product. The computer program product includes a program. The computer program product can be applied to the terminal device or the network device provided by the embodiments of the present disclosure, and the program causes a computer to execute the method performed by the terminal device or the network device in each embodiment of the present disclosure.

An embodiment of the present disclosure also provides a computer program. The computer program can be applied to the terminal device or the network device provided by the embodiments of the present disclosure, and the computer program causes a computer to execute the method performed by the terminal device or the network device in each embodiment of the present disclosure.

It should be understood that in embodiments of the present disclosure, "B corresponding to A" means that B is associated with A, and B can be determined from A. However, it should also be understood that determining B from A does not mean that B is determined from A alone, and mean that B may also be determined from A and/or other information.

It should be understood that the term "and/or" herein merely describes an association relationship between associated objects, and means that there may be three relationships, for example, A and/or B, which may mean: A exists alone, both A and B exist, and B exists alone. In addition, the character "/" in the present disclosure generally indicates that the related objects before and after are in an "or" relationship.

It should be understood that in various embodiments of the present disclosure, the sequence numbers of the above-described steps do not mean the sequence of execution, and the sequence of execution of each step should be determined by its function and internal logic, and should not constitute any limitation on the implementation of the embodiments of the present disclosure.

In several embodiments provided herein, it should be understood that the described systems, apparatuses, and methods may be implemented in other ways. For example, the device embodiments described above are merely schematic, for example, the division of units is only a logical function division, and there may be other division manners in actual implementation, for example, multiple units or components may be combined or integrated into another system, or some features may be ignored or not implemented. In addition, the mutual coupling or direct coupling or communication connection between each other shown or discussed may be performed through some interfaces, and indirect coupling or communication connection between apparatuses or units may be electrical, mechanical or the like.

The units described as separate units may be or may not be physically separate, and the units displayed as units may be or may not be physical units, that is, they may be located in one place or may be distributed over a plurality of network units. Some or all of the units may be selected according to actual needs to achieve the purpose of the solution of the present embodiments.

In addition, each functional unit in each embodiment of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure may be generated in whole or in part. The computer may be a general purpose computer, a special purpose computer, a computer network, or other programmable device. The computer instructions may be stored in a computer-readable storage medium or transmitted from a computer-readable storage medium to another computer-readable storage medium, for example, the computer instructions may be transmitted from a website station, a computer, a server or a data center by wired (e.g. coaxial cable, optical fiber, digital subscriber line (DSL)) or wireless (e.g. infrared, wireless, microwave, etc.) means to another website station, computer, server or data center. The computer-readable storage medium may be any available medium that can be read by a computer or a data storage device such as a server, a data center, or the like that incorporates one or more available media. The available media may be magnetic media (e.g., floppy disk, hard disk, magnetic tape), optical media (e.g., digital video disc (DVD)), or semiconductor media (e.g., solid state disk (SSD)), etc.

The above are merely specific embodiments of the present disclosure, and the scope of protection of the present disclosure is not limited thereto. Any changes or substitutions, which can be easily thought of by persons skilled in the art within the technical scope of the present disclosure, shall be covered within the scope of protection of the present disclosure. Therefore, the scope of protection of the present disclosure should be based on the scope of protection of the claims.

**Claims**

1.  A wireless communication method, comprising:
    performing, by a first terminal device, cell selection according to a first criterion, wherein the first criterion corresponds to an alert signal.

2.  The method of claim 1, wherein the first criterion comprises:

    a second criterion, which is used for the terminal device to perform cell selection based on signal received power and/or signal receiving quality of a cell; and
    a third criterion, which is used for the terminal device to perform cell selection based on a location.

3.  The method of claim 2, wherein the second criterion is associated with one or more of followings:

    a first parameter for indicating a threshold of a cell selection reception level value and/or a cell selection quality value; and
    a second parameter for determining the cell selection reception level value and/or the cell selection quality value.

4.  The method of claim 3, wherein the first parameter corresponds to the alert signal.

5.  The method of claim 4, wherein a value of the first parameter is less than a threshold corresponding to a fourth criterion, wherein the fourth criterion is used for cell selection, and the fourth criterion is not associated with the alert signal.

6.  The method of any one of claims 3 to 5, wherein the value of the first parameter is less than 0.

7.  The method of any one of claims 3 to 6, wherein one or more than one parameter among the second parameters corresponds to the alert signal.

8.  The method of claim 7, wherein the second parameter comprises a third parameter, the third parameter being used to indicate a minimum requirement of the cell for signal received power and/or signal receiving quality, and the third parameter corresponding to the alert signal.

9.  The method of claim 7, wherein the second parameter comprises a fourth parameter, the fourth parameter being used to indicate an offset value of a third parameter, the third parameter being used to indicate a minimum requirement of the cell for signal received power and/or signal receiving quality, and the fourth parameter corresponding to the alert signal.

10. The method of claim 9, wherein

    the cell selection reception level value and/or the cell selection quality value are determined based on a difference between the third parameter and the fourth parameter, and a value of the fourth parameter is greater than 0; or,
    the cell selection reception level value and/or the cell selection quality value are determined based on a sum of the third parameter and the fourth parameter, and the value of the fourth parameter is less than 0.

11. The method of any one of claims 2 to 10, wherein the third criterion is associated with one or more of followings:

    a location of the terminal device;
    a location of a ground reference point of the cell;
    a location of a satellite;
    a distance between the terminal device and the cell ground reference point;

a distance between the terminal device and the satellite;
signal transmission time between the terminal device and the satellite; and
a timing advance of a service link between the terminal device and the satellite.

**12.** The method of claim 11, wherein the third criterion comprises one or more of followings:

when the distance between the terminal device between the ground reference point of the current cell is less than or equal to a first threshold, the terminal device satisfies the third criterion;
when the distance between the terminal device and the satellite corresponding to the current cell is less than or equal to a second threshold, the terminal device satisfies the third criterion;
when the signal transmission time between the terminal device and the satellite corresponding to the current cell is less than or equal to a third threshold, the terminal device satisfies the third criterion; and
when the timing advance of the service link between the terminal device and the current cell is less than or equal to a fourth threshold, the terminal device satisfies the third criterion.

**13.** The method of any one of claims 2 to 12, wherein performing cell selection by the first terminal device according to the first criterion comprises:

when the second criterion is satisfied, determining by the first terminal device that the current cell satisfies a camping condition or a cell selection criterion; or,
when both the second criterion and the third criterion are satisfied, determining by the first terminal device that the current cell satisfies a camping condition or a cell selection criterion; or,
when the second criterion is satisfied or the third criterion is satisfied, determining by the first terminal device that the current cell satisfies a camping condition or a cell selection criterion.

**14.** The method of any one of claims 1 to 13, further comprising:
receiving, by the first terminal device, first configuration information from a network device, the first configuration information corresponding to the alert signal.

**15.** The method of claim 14, wherein the first configuration information comprises one or more of followings:

first information, indicating whether a current cell supports transmission of the alert signal;
second information, for configuring time-frequency resources of the alert signal; and
third information, indicating a threshold for determining whether the first criterion is satisfied.

**16.** A wireless communication method, comprising:
activating or deactivating, by a first terminal device, a reception function for an alert signal.

**17.** The method of claim 16, wherein the activation or deactivation of the reception function for the alert signal is determined based on a first condition, the first condition being associated with one or more of followings:

signal received power of a cell;
signal receiving quality of the cell;
a detection result of a first channel, wherein the first channel is used for scheduling paging information of the first terminal device; and
a reception result of a second channel, wherein the second channel is used for carrying paging information of the first terminal device.

**18.** The method of claim 17, wherein the first condition comprises:

in a case that the signal received power and/or the signal receiving quality of the cell is lower than or equal to a first threshold, the first terminal device activates the reception function for the alert signal; or,
in a case that the signal received power and/or the signal receiving quality of the cell is higher than or equal to the first threshold, the first terminal device deactivates the reception function for the alert signal.

**19.** The method of claim 17, wherein the first condition comprises:

in a case that the signal received power and/or the signal receiving quality of the cell is lower than or equal to a second threshold within a first time period, the first terminal device activates the reception function for the alert signal; or,

in a case that the signal received power and/or the signal receiving quality of the cell is higher than or equal to the second threshold within the first time period, the first terminal device deactivates the reception function for the alert signal.

20. The method of claim 17, wherein the first condition comprises:

in a case that the reception function for the alert signal of the first terminal device is in a deactivated state, and the signal received power and/or the signal receiving quality of the cell is lower than or equal to a third threshold, the first terminal device activates the reception function for the alert signal; or,

in a case that the reception function for the alert signal of the first terminal device is in an activated state, and the signal received power and/or the signal receiving quality of the cell is higher than or equal to a fourth threshold, the first terminal device deactivates the reception function for the alert signal.

21. The method of claim 17, wherein the first condition comprises:

in a case that the reception function for the alert signal of the first terminal device is in a deactivated state, and the signal received power and/or the signal receiving quality of the cell is lower than or equal to a third threshold within a second time period, the first terminal device activates the reception function for the alert signal; or,

in a case that the reception function for the alert signal of the first terminal device is in an activated state, and the signal received power and/or the signal receiving quality of the cell is higher than or equal to a fourth threshold in the second time period, the first terminal device deactivates the reception function for the alert signal.

22. The method of claim 17, wherein the first condition comprises one or more of followings:

in a case that the first terminal device fails to detect the first channel, the first terminal device activates the reception function for the alert signal;

in a case that the first terminal device fails to detect the first channel for N1 consecutive times, the first terminal device activates the reception function for the alert signal, wherein N1 is a positive integer greater than 1;

in a case that the first terminal device fails to receive the second channel, the first terminal device activates the reception function for the alert signal;

in a case that the first terminal device fails to receive the second channel for N2 consecutive times, the first terminal device activates the reception function for the alert signal, wherein N2 is a positive integer greater than 1;

in a case that the first terminal device continuously fails to detect the first channel within a third time period, the first terminal device activates the reception function for the alert signal;

in a case that the first terminal device continuously fails to receive the second channel within a fourth time period, the first terminal device activates the reception function for the alert signal;

in a case that the first terminal device fails to detect the first channel more than or equal to N3 times in a fifth time period, the first terminal device activates the reception function for the alert signal, wherein N3 is a positive integer greater than or equal to 1; and

in a case that the first terminal device fails to receive the second channel more than or equal to N4 times in a sixth time period, the first terminal device activates the reception function for the alert signal, wherein N4 is a positive integer greater than or equal to 1.

23. The method of claim 17, wherein the first condition comprises one or more of followings:

in a case that the first terminal device successfully detects the first channel, the first terminal device deactivates the reception function for the alert signal;

in a case that the first terminal device successfully detects the first channel for N5 consecutive times, the first terminal device deactivates the reception function for the alert signal, wherein N5 is a positive integer greater than 1;

in a case that the first terminal device successfully receives the second channel, the first terminal device deactivates the reception function for the alert signal;

in a case that the first terminal device successfully receives the second channel for N6 consecutive times, the first terminal device deactivates the reception function for the alert signal, wherein N6 is a positive integer greater than 1;

in a case that the first terminal device continuously detects the first channel successfully within a seventh time period, the first terminal device deactivates the reception function for the alert signal;

in a case that the first terminal device successfully continuously receives the second channel within an eighth time period, the first terminal device deactivates the reception function for the alert signal;

in a case that the first terminal device successfully detects the first channel more than or equal to N7 times in a ninth time period, the first terminal device deactivates the reception function for the alert signal, wherein N7 is a positive integer greater than or equal to 1; and

in a case that the first terminal device successfully receives the second channel more than or equal to N8 times in a tenth time period, the first terminal device deactivates the reception function for the alert signal, wherein N8 is a positive integer greater than or equal to 1.

24. The method of any one of claims 16 to 23, further comprising:

receiving, by the first terminal device, first configuration information from a network device, the first configuration information corresponding to the alert signal.

25. The method of claim 24, wherein the first configuration information comprises one or more of followings:

first information, indicating whether a current cell supports transmission of the alert signal;
second information, for configuring time-frequency resources of the alert signal; and
fourth information, indicating a threshold for activating or deactivating the reception function for the alert signal.

26. A wireless communication method, comprising:

transmitting, by a network device, first configuration information to a first terminal device, the first configuration information corresponding to an alert signal.

27. The method of claim 26, wherein the first configuration information comprises one or more of followings:

first information, indicating whether a current cell supports transmission of the alert signal;
second information, for configuring time-frequency resources of the alert signal;
third information, indicating a threshold for determining whether a first criterion is satisfied, the first criterion corresponding to the alert signal; and
fourth information, indicating a threshold for activating or deactivating a reception function for the alert signal.

28. The method of claim 27, wherein the first criterion comprises:

a second criterion, used for the terminal device to perform cell selection based on signal received power and/or signal receiving quality of the cell; and
a third criterion, used for the terminal device to perform cell selection based on a location.

29. The method of claim 28, wherein the second criterion is associated with one or more of followings:

a first parameter, for indicating a threshold of a cell selection reception level value and/or a cell selection quality value; and
a second parameter, for determining the cell selection reception level value and/or the cell selection quality value.

30. The method of claim 29, wherein the first parameter corresponds to the alert signal.

31. The method of claim 30, wherein a value of the first parameter is less than a threshold corresponding to a fourth criterion, wherein the fourth criterion is used for cell selection, and the fourth criterion is not associated with the alert signal.

32. The method of any one of claims 29 to 31, wherein the value of the first parameter is less than 0.

33. The method of any one of claims 29 to 32, wherein one or more than one parameter among the second parameters corresponds to the alert signal.

34. The method of claim 33, wherein the second parameter comprises a third parameter, the third parameter being used to indicate a minimum requirement of the cell for signal received power and/or signal receiving quality, and the third parameter corresponding to the alert signal.

35. The method of claim 33, wherein the second parameter comprises a fourth parameter, the fourth parameter being used to indicate an offset value of a third parameter, the third parameter being used to indicate a minimum requirement of the cell for signal received power and/or signal receiving quality, and the fourth parameter corresponding to the alert signal.

36. The method of claim 35, wherein

the cell selection reception level value and/or the cell selection quality value are determined based on a difference between the third parameter and the fourth parameter, and a value of the fourth parameter is greater than 0; or, the cell selection reception level value and/or the cell selection quality value are determined based on a sum of the third parameter and the fourth parameter, and the value of the fourth parameter is less than 0.

37. The method of any one of claims 28 to 36, wherein the third criterion is associated with one or more of followings:

a location of the terminal device;
a location of a ground reference point of the cell;
a location of a satellite;
a distance between the terminal device and the cell ground reference point;
a distance between the terminal device and the satellite;
signal transmission time between the terminal device and the satellite; and
a timing advance of a service link between the terminal device and the satellite.

38. The method of claim 37, wherein the third criterion comprises one or more of followings:

when the distance between the terminal device between the ground reference point of the current cell is less than or equal to a first threshold, the terminal device satisfies the third criterion;
when the distance between the terminal device and the satellite corresponding to the current cell is less than or equal to a second threshold, the terminal device satisfies the third criterion;
when the signal transmission time between the terminal device and the satellite corresponding to the current cell is less than or equal to a third threshold, the terminal device satisfies the third criterion; and
when the timing advance of the service link between the terminal device and the current cell is less than or equal to a fourth threshold, the terminal device satisfies the third criterion.

39. The method of any one of claims 28 to 38, wherein

when the second criterion is satisfied, the current cell satisfies a camping condition or a cell selection criterion; or,
when both the second criterion and the third criterion are satisfied, the current cell satisfies a camping condition or a cell selection criterion; or,
when the second criterion is satisfied or the third criterion is satisfied, the current cell satisfies a camping condition or a cell selection criterion.

40. The method of any one of claims 26 to 39, wherein activation or deactivation of a reception function for the alert signal is determined based on a first condition, the first condition being associated with one or more of followings:

signal received power of a cell;
signal receiving quality of the cell;
a detection result of a first channel, wherein the first channel is used for scheduling paging information of the first terminal device; and
a reception result of a second channel, wherein the second channel is used for carrying paging information of the first terminal device.

41. The method of claim 40, wherein the first condition comprises:

in a case that the signal received power and/or the signal receiving quality of the cell is lower than or equal to a first threshold, the first terminal device activates the reception function for the alert signal; or,
in a case that the signal received power and/or the signal receiving quality of the cell is higher than or equal to the first threshold, the first terminal device deactivates the reception function for the alert signal.

**42.** The method of claim 40, wherein the first condition comprises:

in a case that the signal received power and/or the signal receiving quality of the cell is lower than or equal to a second threshold within a first time period, the first terminal device activates the reception function for the alert signal; or,
in a case that the signal received power and/or the signal receiving quality of the cell is higher than or equal to the second threshold within the first time period, the first terminal device deactivates the reception function for the alert signal.

**43.** The method of claim 40, wherein the first condition comprises:

in a case that the reception function for the alert signal of the first terminal device is in a deactivated state, and the signal received power and/or the signal receiving quality of the cell is lower than or equal to a third threshold, the first terminal device activates the reception function for the alert signal; or,
in a case that the reception function for the alert signal of the first terminal device is in an activated state, and the signal received power and/or the signal receiving quality of the cell is higher than or equal to a fourth threshold, the first terminal device deactivates the reception function for the alert signal.

**44.** The method of claim 40, wherein the first condition comprises:

in a case that the reception function for the alert signal of the first terminal device is in a deactivated state, and the signal received power and/or the signal receiving quality of the cell is lower than or equal to a third threshold within a second time period, the first terminal device activates the reception function for the alert signal; or,
in a case that the reception function for the alert signal of the first terminal device is in an activated state, and the signal received power and/or the signal receiving quality of the cell is higher than or equal to a fourth threshold in the second time period, the first terminal device deactivates the reception function for the alert signal.

**45.** The method of claim 40, wherein the first condition comprises one or more of followings:

in a case that the first terminal device fails to detect the first channel, the first terminal device activates the reception function for the alert signal;
in a case that the first terminal device fails to detect the first channel for N1 consecutive times, the first terminal device activates the reception function for the alert signal, wherein N1 is a positive integer greater than 1;
in a case that the first terminal device fails to receive the second channel, the first terminal device activates the reception function for the alert signal;
in a case that the first terminal device fails to receive the second channel for N2 consecutive times, the first terminal device activates the reception function for the alert signal, wherein N2 is a positive integer greater than 1;
in a case that the first terminal device continuously fails to detect the first channel within a third time period, the first terminal device activates the reception function for the alert signal;
in a case that the first terminal device continuously fails to receive the second channel within a fourth time period, the first terminal device activates the reception function for the alert signal;
in a case that the first terminal device fails to detect the first channel more than or equal to N3 times in a fifth time period, the first terminal device activates the reception function for the alert signal, wherein N3 is a positive integer greater than or equal to 1; and
in a case that the first terminal device fails to receive the second channel more than or equal to N4 times in a sixth time period, the first terminal device activates the reception function for the alert signal, wherein N4 is a positive integer greater than or equal to 1.

**46.** The method of claim 40, wherein the first condition comprises one or more of followings:

in a case that the first terminal device successfully detects the first channel, the first terminal device deactivates the reception function for the alert signal;
in a case that the first terminal device successfully detects the first channel for N5 consecutive times, the first terminal device deactivates the reception function for the alert signal, wherein N5 is a positive integer greater than 1;
in a case that the first terminal device successfully receives the second channel, the first terminal device deactivates the reception function for the alert signal;
in a case that the first terminal device successfully receives the second channel for N6 consecutive times, the first terminal device deactivates the reception function for the alert signal, wherein N6 is a positive integer greater than 1;

in a case that the first terminal device continuously detects the first channel successfully within a seventh time period, the first terminal device deactivates the reception function for the alert signal;

in a case that the first terminal device successfully continuously receives the second channel within an eighth time period, the first terminal device deactivates the reception function for the alert signal;

in a case that the first terminal device successfully detects the first channel more than or equal to N7 times in a ninth time period, the first terminal device deactivates the reception function for the alert signal, wherein N7 is a positive integer greater than or equal to 1; and

in a case that the first terminal device successfully receives the second channel more than or equal to N8 times in a tenth time period, the first terminal device deactivates the reception function for the alert signal, wherein N8 is a positive integer greater than or equal to 1.

47. A terminal device, wherein the terminal device is a first terminal device, the terminal device comprising: a processing module, configured to perform cell selection according to a first criterion, the first criterion corresponding to an alert signal.

48. The terminal device of claim 47, wherein the first criterion comprises:

a second criterion, used the terminal device to perform cell selection based on signal received power and/or signal receiving quality of a cell; and

a third criterion, used for the terminal device to perform cell selection based on a location.

49. The terminal device of claim 48, wherein the second criterion is associated with one or more of followings:

a first parameter for indicating a threshold of a cell selection reception level value and/or a cell selection quality value; and

a second parameter for determining the cell selection reception level value and/or the cell selection quality value.

50. The terminal device of claim 49, wherein the first parameter corresponds to the alert signal.

51. The terminal device of claim 50, wherein a value of the first parameter is less than a threshold corresponding to a fourth criterion, wherein the fourth criterion is used for cell selection, and the fourth criterion is not associated with the alert signal.

52. The terminal device of any one of claims 49 to 51, wherein the value of the first parameter is less than 0.

53. The terminal device of any one of claims 49 to 52, wherein one or more than one parameter among the second parameters corresponds to the alert signal.

54. The terminal device of claim 53, wherein the second parameter comprises a third parameter, the third parameter being used to indicate a minimum requirement of the cell for signal received power and/or signal receiving quality, and the third parameter corresponding to the alert signal.

55. The terminal device of claim 53, wherein the second parameter comprises a fourth parameter, the fourth parameter being used to indicate an offset value of a third parameter, the third parameter being used to indicate a minimum requirement of the cell for signal received power and/or signal receiving quality, and the fourth parameter corresponding to the alert signal.

56. The terminal device of claim 55, wherein

the cell selection reception level value and/or the cell selection quality value are determined based on a difference between the third parameter and the fourth parameter, and a value of the fourth parameter is greater than 0; or, the cell selection reception level value and/or the cell selection quality value are determined based on a sum of the third parameter and the fourth parameter, and a value of the fourth parameter is less than 0.

57. The terminal device of any one of claims 48 to 56, wherein the third criterion is associated with one or more of followings:

a location of the terminal device;
a location of a ground reference point of the cell;
a location of a satellite;
a distance between the terminal device and the cell ground reference point;
a distance between the terminal device and the satellite;
signal transmission time between the terminal device and the satellite; and
a timing advance of a service link between the terminal device and the satellite.

58. The terminal device of claim 57, wherein the third criterion comprises one or more of followings:

when the distance between the terminal device between the ground reference point of the current cell is less than or equal to a first threshold, the terminal device satisfies the third criterion;
when the distance between the terminal device and the satellite corresponding to the current cell is less than or equal to a second threshold, the terminal device satisfies the third criterion;
when the signal transmission time between the terminal device and the satellite corresponding to the current cell is less than or equal to a third threshold, the terminal device satisfies the third criterion; and
when the timing advance of the service link between the terminal device and the current cell is less than or equal to a fourth threshold, the terminal device satisfies the third criterion.

59. The terminal device of any one of claims 48 to 58, wherein the processing module is configured to:

when the second criterion is satisfied, the first terminal device determines that the current cell satisfies a camping condition or a cell selection criterion; or,
when both the second criterion and the third criterion are satisfied, the first terminal device determines that the current cell satisfies a camping condition or a cell selection criterion; or,
when the second criterion is satisfied or the third criterion is satisfied, the first terminal device determines that the current cell satisfies a camping condition or a cell selection criterion.

60. The terminal device of any one of claims 47 to 59, further comprising:
a communication module, configured to receive first configuration information from a network device, the first configuration information corresponding to the alert signal.

61. The terminal device of claim 60, wherein the first configuration information comprises one or more of followings:

first information, indicating whether a current cell supports transmission of the alert signal;
second information, for configuring time-frequency resources of the alert signal; and
third information, indicating a threshold for determining whether the first criterion is satisfied.

62. A terminal device, wherein the terminal device is a first terminal device, the terminal device comprising:
a processing module, configured to activate or deactivate a reception function for an alert signal.

63. The terminal device of claim 62, wherein the activation or deactivation of the reception function for the alert signal is determined based on a first condition associated with one or more of followings:

signal received power of a cell;
signal receiving quality of the cell;
a detection result of a first channel, wherein the first channel is used for scheduling paging information of the first terminal device; and
a reception result of a second channel, wherein the second channel is used for carrying paging information of the first terminal device.

64. The terminal device of claim 63, wherein the first condition comprises:

in a case that the signal received power and/or the signal receiving quality of the cell is lower than or equal to a first threshold, the first terminal device activates the reception function for the alert signal; or,
in a case that the signal received power and/or the signal receiving quality of the cell is higher than or equal to the first threshold, the first terminal device deactivates the reception function for the alert signal.

**65.** The terminal device of claim 63, wherein the first condition comprises:

in a case that the signal received power and/or the signal receiving quality of the cell is lower than or equal to a second threshold within a first time period, the first terminal device activates the reception function for the alert signal; or,
in a case that the signal received power and/or the signal receiving quality of the cell is higher than or equal to the second threshold within the first time period, the first terminal device deactivates the reception function for the alert signal.

**66.** The terminal device of claim 63, wherein the first condition comprises:

in a case that the reception function for the alert signal of the first terminal device is in a deactivated state, and the signal received power and/or the signal receiving quality of the cell is lower than or equal to a third threshold, the first terminal device activates the reception function for the alert signal; or,
in a case that the reception function for the alert signal of the first terminal device is in an activated state, and the signal received power and/or the signal receiving quality of the cell is higher than or equal to a fourth threshold, the first terminal device deactivates the reception function for the alert signal.

**67.** The terminal device of claim 63, wherein the first condition comprises:

in a case that the reception function for the alert signal of the first terminal device is in a deactivated state, and the signal received power and/or the signal receiving quality of the cell is lower than or equal to a third threshold within a second time period, the first terminal device activates the reception function for the alert signal; or,
in a case that the reception function for the alert signal of the first terminal device is in an activated state, and the signal received power and/or the signal receiving quality of the cell is higher than or equal to a fourth threshold in the second time period, the first terminal device deactivates the reception function for the alert signal.

**68.** The terminal device of claim 63, wherein the first condition comprises one or more of followings:

in a case that the first terminal device fails to detect the first channel, the first terminal device activates the reception function for the alert signal;
in a case that the first terminal device fails to detect the first channel for N1 consecutive times, the first terminal device activates the reception function for the alert signal, wherein N1 is a positive integer greater than 1;
in a case that the first terminal device fails to receive the second channel, the first terminal device activates the reception function for the alert signal;
in a case that the first terminal device fails to receive the second channel for N2 consecutive times, the first terminal device activates the reception function for the alert signal, wherein N2 is a positive integer greater than 1;
in a case that the first terminal device continuously fails to detect the first channel within a third time period, the first terminal device activates the reception function for the alert signal;
in a case that the first terminal device continuously fails to receive the second channel within a fourth time period, the first terminal device activates the reception function for the alert signal;
in a case that the first terminal device fails to detect the first channel more than or equal to N3 times in a fifth time period, the first terminal device activates the reception function for the alert signal, wherein N3 is a positive integer greater than or equal to 1; and
in a case that the first terminal device fails to receive the second channel more than or equal to N4 times in a sixth time period, the first terminal device activates the reception function for the alert signal, wherein N4 is a positive integer greater than or equal to 1.

**69.** The terminal device of claim 63, wherein the first condition comprises one or more of followings:

in a case that the first terminal device successfully detects the first channel, the first terminal device deactivates the reception function for the alert signal;
in a case that the first terminal device successfully detects the first channel for N5 consecutive times, the first terminal device deactivates the reception function for the alert signal, wherein N5 is a positive integer greater than 1;
in a case that the first terminal device successfully receives the second channel, the first terminal device deactivates the reception function for the alert signal;
in a case that the first terminal device successfully receives the second channel for N6 consecutive times, the first terminal device deactivates the reception function for the alert signal, wherein N6 is a positive integer greater than 1;

in a case that the first terminal device continuously detects the first channel successfully within a seventh time period, the first terminal device deactivates the reception function for the alert signal;

in a case that the first terminal device successfully continuously receives the second channel within an eighth time period, the first terminal device deactivates the reception function for the alert signal;

in a case that the first terminal device successfully detects the first channel more than or equal to N7 times in a ninth time period, the first terminal device deactivates the reception function for the alert signal, wherein N7 is a positive integer greater than or equal to 1; and

in a case that the first terminal device successfully receives the second channel more than or equal to N8 times in a tenth time period, the first terminal device deactivates the reception function for the alert signal, wherein N8 is a positive integer greater than or equal to 1.

70. The terminal device of any one of claims 62 to 69, further comprising:

a communication module, configured to receive first configuration information from a network device, wherein the first configuration information corresponds to the alert signal.

71. The terminal device of claim 70, wherein the first configuration information comprises one or more of followings:

first information, indicating whether the current cell supports transmission of the alert signal;
second information, for configuring time-frequency resources of the alert signal; and
fourth information, indicating a threshold for activating or deactivating the reception function for the alert signal.

72. A network device, comprising:

a communication module, configured to transmit first configuration information to a first terminal device, wherein the first configuration information corresponds to an alert signal.

73. The network device of claim 72, wherein the first configuration information comprises one or more of followings:

first information, indicating whether a current cell supports transmission of the alert signal;
second information, for configuring time-frequency resources of the alert signal;
third information, indicating a threshold for determining whether a first criterion is satisfied, the first criterion corresponding to an alert signal; and
fourth information, indicating a threshold for activating or deactivating a reception function for the alert signal.

74. The network device of claim 73, wherein the first criterion comprises:

a second criterion, used for the terminal device to perform cell selection based on signal received power and/or signal receiving quality of the cell; and
a third criterion, used for the terminal device to perform cell selection based on a location.

75. The network device of claim 74, wherein the second criterion is associated with one or more of followings:

a first parameter, for indicating a threshold of a cell selection reception level value and/or a cell selection quality value; and
a second parameter, for determining the cell selection reception level value and/or the cell selection quality value.

76. The network device of claim 75, wherein the first parameter corresponds to the alert signal.

77. The network device of claim 76, wherein a value of the first parameter is less than a threshold corresponding to a fourth criterion, wherein the fourth criterion is used for cell selection, and the fourth criterion is not associated with the alert signal.

78. The network device of any one of claims 75 to 77, wherein the value of the first parameter is less than 0.

79. The network device of any one of claims 57 to 78, wherein one or more than one parameter among the second parameters corresponds to the alert signal.

80. The network device of claim 79, wherein the second parameter comprises a third parameter, the third parameter being used to indicate a minimum requirement of the cell for signal received power and/or signal receiving quality, and the third parameter corresponding to the alert signal.

81. The network device of claim 79, wherein the second parameter comprises a fourth parameter, the fourth parameter being used to indicate an offset value of a third parameter, the third parameter being used to indicate a minimum requirement of the cell for signal received power and/or signal receiving quality, and the fourth parameter corresponding to the alert signal.

82. The network device of claim 81, wherein

the cell selection reception level value and/or the cell selection quality value are determined based on a difference between the third parameter and the fourth parameter, and a value of the fourth parameter is greater than 0; or, the cell selection reception level value and/or the cell selection quality value are determined based on a sum of the third parameter and the fourth parameter, and the value of the fourth parameter is less than 0.

83. The network device of any one of claims 74 to 82, wherein the third criterion is associated with one or more of followings:

a location of the terminal device;
a location of a ground reference point of the cell;
a location of a satellite;
a distance between the terminal device and the cell ground reference point;
a distance between the terminal device and the satellite;
signal transmission time between the terminal device and the satellite; and
a timing advance of a service link between the terminal device and the satellite.

84. The network device of claim 83, wherein the third criterion comprises one or more of followings:

when the distance between the terminal device between the ground reference point of the current cell is less than or equal to a first threshold, the terminal device satisfies the third criterion;
when the distance between the terminal device and the satellite corresponding to the current cell is less than or equal to a second threshold, the terminal device satisfies the third criterion;
when the signal transmission time between the terminal device and the satellite corresponding to the current cell is less than or equal to a third threshold, the terminal device satisfies the third criterion; and
when the timing advance of the service link between the terminal device and the current cell is less than or equal to a fourth threshold, the terminal device satisfies the third criterion.

85. The network device of any one of claims 74 to 84, wherein

when the second criterion is satisfied, the current cell satisfies a camping condition or a cell selection criterion; or,
when both the second criterion and the third criterion are satisfied, the current cell satisfies a camping condition or a cell selection criterion; or,
when the second criterion is satisfied or the third criterion is satisfied, the current cell satisfies a camping condition or a cell selection criterion.

86. The network device of any one of claims 72 to 85, wherein activation or deactivation of a reception function for the alert signal is determined based on a first condition, the first condition being associated with one or more of followings:

signal received power of a cell;
signal receiving quality of the cell;
a detection result of a first channel, wherein the first channel is used for scheduling paging information of the first terminal device; and
a reception result of a second channel, wherein the second channel is used for carrying paging information of the first terminal device.

87. The network device of claim 86, wherein the first condition comprises:

in a case that the signal received power and/or the signal receiving quality of the cell is lower than or equal to a first threshold, the first terminal device activates the reception function for the alert signal; or,

in a case that the signal received power and/or the signal receiving quality of the cell is higher than or equal to the first threshold, the first terminal device deactivates the reception function for the alert signal.

88. The network device of claim 86, wherein the first condition comprises:

in a case that the signal received power and/or the signal receiving quality of the cell is lower than or equal to a second threshold within a first time period, the first terminal device activates the reception function for the alert signal; or,

in a case that the signal received power and/or the signal receiving quality of the cell is higher than or equal to the second threshold within the first time period, the first terminal device deactivates the reception function for the alert signal.

89. The network device of claim 86, wherein the first condition comprises:

in a case that the reception function for the alert signal of the first terminal device is in a deactivated state, and the signal received power and/or the signal receiving quality of the cell is lower than or equal to a third threshold, the first terminal device activates the reception function for the alert signal; or,

in a case that the reception function for the alert signal of the first terminal device is in an activated state, and the signal received power and/or the signal receiving quality of the cell is higher than or equal to a fourth threshold, the first terminal device deactivates the reception function for the alert signal.

90. The network device of claim 86, wherein the first condition comprises:

in a case that the reception function for the alert signal of the first terminal device is in a deactivated state, and the signal received power and/or the signal receiving quality of the cell is lower than or equal to a third threshold within a second time period, the first terminal device activates the reception function for the alert signal; or,

in a case that the reception function for the alert signal of the first terminal device is in an activated state, and the signal received power and/or the signal receiving quality of the cell is higher than or equal to a fourth threshold in the second time period, the first terminal device deactivates the reception function for the alert signal.

91. The network device of claim 86, wherein the first condition comprises one or more of followings:

in a case that the first terminal device fails to detect the first channel, the first terminal device activates the reception function for the alert signal;

in a case that the first terminal device fails to detect the first channel for N1 consecutive times, the first terminal device activates the reception function for the alert signal, wherein N1 is a positive integer greater than 1;

in a case that the first terminal device fails to receive the second channel, the first terminal device activates the reception function for the alert signal;

in a case that the first terminal device fails to receive the second channel for N2 consecutive times, the first terminal device activates the reception function for the alert signal, wherein N2 is a positive integer greater than 1;

in a case that the first terminal device continuously fails to detect the first channel within a third time period, the first terminal device activates the reception function for the alert signal;

in a case that the first terminal device continuously fails to receive the second channel within a fourth time period, the first terminal device activates the reception function for the alert signal;

in a case that the first terminal device fails to detect the first channel more than or equal to N3 times in a fifth time period, the first terminal device activates the reception function for the alert signal, wherein N3 is a positive integer greater than or equal to 1; and

in a case that the first terminal device fails to receive the second channel more than or equal to N4 times in a sixth time period, the first terminal device activates the reception function for the alert signal, wherein N4 is a positive integer greater than or equal to 1.

92. The network device of claim 86, wherein the first condition comprises one or more of followings:

in a case that the first terminal device successfully detects the first channel, the first terminal device deactivates the reception function for the alert signal;

in a case that the first terminal device successfully detects the first channel for N5 consecutive times, the first terminal device deactivates the reception function for the alert signal, wherein N5 is a positive integer greater than 1;

in a case that the first terminal device successfully receives the second channel, the first terminal device deactivates the reception function for the alert signal;

in a case that the first terminal device successfully receives the second channel for N6 consecutive times, the first terminal device deactivates the reception function for the alert signal, wherein N6 is a positive integer greater than 1;

in a case that the first terminal device continuously detects the first channel successfully within a seventh time period, the first terminal device deactivates the reception function for the alert signal;

in a case that the first terminal device successfully continuously receives the second channel within an eighth time period, the first terminal device deactivates the reception function for the alert signal;

in a case that the first terminal device successfully detects the first channel more than or equal to N7 times in a ninth time period, the first terminal device deactivates the reception function for the alert signal, wherein N7 is a positive integer greater than or equal to 1; and

in a case that the first terminal device successfully receives the second channel more than or equal to N8 times in a tenth time period, the first terminal device deactivates the reception function for the alert signal, wherein N8 is a positive integer greater than or equal to 1.

93. A terminal device, comprising: a memory for storing a program and a processor for calling the program in the memory to cause the terminal device to perform the method of any one of claims 1 to 15 or claims 16 to 25.

94. A network device, comprising: a memory for storing a program and a processor for calling the program in the memory to cause the network device to perform the method of any one of claims 26 to 46.

95. An apparatus, comprising: a processor for calling a program from a memory to cause the apparatus to perform the method of any one of claims 1 to 15, 16 to 25 or 26 to 46.

96. A chip, comprising: a processor for calling a program from a memory to cause a device on which the chip is mounted to perform the method of any one of claims 1 to 15, claims 16 to 25 or claims 26 to 46.

97. A computer-readable storage medium, having stored thereon a program that causes a computer to perform the method of any one of claims 1 to 15, claims 16 to 25 or claims 26 to 46.

98. A computer program product, comprising a program that causes a computer to perform the method of any one of claims 1 to 15, claims 16 to 25 or claims 26 to 46.

99. A computer program, enabling a computer to perform the method of any one of claims 1 to 15, 16 to 25 or 26 to 46.

**100**

FIG. 1A

FIG. 1B

**FIG. 1C**

| The first terminal device performs cell selection according to a first criterion | S210 |

**FIG. 2**

| First terminal device | | Network device |

S310 First configuration information

**FIG. 3**

Receive alert-related configuration information broadcast by a network device ⎯ S410

Determine whether the current cell satisfies the S criterion, or whether the current cell satisfies the second criterion and/or the third criterion ⎯ S420

Yes

No

Select to camp in the current cell ⎯ S430

Whether the S criterion is not satisfied in any cell, and the terminal device does not satisfy the second criterion and/or the third criterion in any cell supporting the alert signal transmission function? ⎯ S440

否

Yes

Enter any cell selection state ⎯ S450

Select to camp in a cell that satisfies the S criterion or satisfies the second and/or third criterion ⎯ S460

**FIG. 4**

The first terminal device activates or deactivates a reception function for an alert signal ⎯ S510

**FIG. 5**

RSRP/RSRQ above first threshold

Alert-signal reception function of terminal device is in an activated state

Alert-signal reception function of terminal device is in a deactivated state

RSRP/RSRQ below first threshold

**FIG. 6**

First terminal device

Network device

S710 First configuration information

**FIG. 7**

Terminal device800

Processing module810

**FIG. 8**

Terminal device900

Processing module910

**FIG. 9**

Network device1000

Communication module1010

**FIG. 10**

Apparatus
1100

Processor
1110

Memory
1120

Transceiver
1130

**FIG. 11**

# EP 4 787 963 A1

## INTERNATIONAL SEARCH REPORT

| | International application No. |
|---|---|
| | **PCT/CN2023/121229** |

### A. CLASSIFICATION OF SUBJECT MATTER

H04W 36/08(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; WOTXT; USTXT; EPTXT; CNKI; 3GPP: 小区, 选择, 重选, S准则, 寻呼, 失败, 预警, 激活, 小区选择接收电平值, 小区选择质量值, 距离, 位置, 门限, 阈值, cell, select, reselect, paging, failure, alert, warning, Srxlev, Squal, distance, position, threshold, RSRP, RSRQ, NTN

### C. DOCUMENTS CONSIDERED TO BE RELEVANT

| Category* | Citation of document, with indication, where appropriate, of the relevant passages | Relevant to claim No. |
|---|---|---|
| X | CN 114710772 A (JLQ TECHNOLOGY CO., LTD.) 05 July 2022 (2022-07-05) description, paragraphs [0039]-[0130] | 1, 14, 16-24, 26, 40-47, 60, 62-70, 72, 86-99 |
| Y | CN 114710772 A (JLQ TECHNOLOGY CO., LTD.) 05 July 2022 (2022-07-05) description, paragraphs [0039]-[0130] | 2-13, 15, 25, 27-39, 48-59, 61, 71, 73-85 |
| Y | WO 2023039897 A1 (GUANGDONG OPPO MOBILE TELECOMMUNICATIONS CORP., LTD.) 23 March 2023 (2023-03-23) description, page 4, line 19 to page 15, line 9 | 2-13, 15, 25, 27-39, 48-59, 61, 71, 73-85 |
| A | CN 115696472 A (VIVO MOBILE COMMUNICATION CO., LTD.) 03 February 2023 (2023-02-03) entire document | 1-99 |
| A | WO 2023159472 A1 (GUANGDONG OPPO MOBILE TELECOMMUNICATIONS CORP., LTD.) 31 August 2023 (2023-08-31) entire document | 1-99 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 May 2024** | **10 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121229**

| Patent document cited in search report | | | Publication date (day/month/year) | Patent family member(s) | Publication date (day/month/year) |
|---|---|---|---|---|---|
| CN | 114710772 | A | 05 July 2022 | None | |
| WO | 2023039897 | A1 | 23 March 2023 | None | |
| CN | 115696472 | A | 03 February 2023 | None | |
| WO | 2023159472 | A1 | 31 August 2023 | None | |

Form PCT/ISA/210 (patent family annex) (July 2022)